# EUROPEAN PATENT SPECIFICATION

(11) **EP 4 318 986 B1**
(45) Date of publication and mention of the grant of the patent: **18.11.2026**
(21) Application number: 22781695.6
(22) Date of filing: 01.04.2022
(51) Int. Cl.: H04J 11/00, H04W 48/10, H04B 17/373, H04W 74/08, H04W 16/14, H04W 74/0808, H04L 5/00, H04W 72/232, H04W 84/12, H04W 74/00, H04W 48/12

(54) **METHOD AND DEVICE FOR CARRYING OUT COMMUNICATION IN WIRELESS COMMUNICATION SYSTEM**
VERFAHREN UND VORRICHTUNG ZUR DURCHFÜHRUNG VON KOMMUNIKATION IN EINEM DRAHTLOSKOMMUNIKATIONSSYSTEM
PROCÉDÉ ET DISPOSITIF POUR EFFECTUER UNE COMMUNICATION DANS UN SYSTÈME DE COMMUNICATION SANS FIL

(30) Priority: 02.04.2021 KR 20210043544; 07.05.2021 KR 20210059499; 18.05.2021 KR 20210064200; 29.09.2021 KR 20210129100
(43) Date of publication of application: 07.02.2024
(73) Proprietor: LG Electronics Inc., Yeongdeungpo-gu Seoul 07336 (KR)
(72) Inventor: KIM, Seonwook, Seoul 06772 (KR); LEE, Youngdae, Seoul 06772 (KR); KO, Hyunsoo, Seoul 06772 (KR); YANG, Suckchel, Seoul 06772 (KR)
(74) Representative: Mooser, Sebastian Thomas
(86) International application number: PCT/KR2022/004714
(87) International publication number: WO 2022/211576

(56) References cited:
- WO-A1-2021/029441
- US-A1- 2020 053 798
- US-A1- 2021 022 179
- US-A1- 2021 051 719
- CATT: "Channel access mechanism for up to 71GHz operation", vol. RAN WG1, no. e-Meeting; 20210125 - 20210205, 19 January 2021 (2021-01-19), XP051970978, Retrieved from the Internet <URL:https://ftp.3gpp.org/tsg_ran/WG1_RL1/TSGR1_104-e/Docs/R1-2100375.zip R1-2100375.docx> [retrieved on 20210119]
- "3rd Generation Partnership Project; Technical Specification Group Radio Access Network; NR; Multiplexing and channel coding (Release 16)", vol. RAN WG1, no. V16.5.0, 30 March 2021 (2021-03-30), pages 1 - 152, XP052000306, Retrieved from the Internet <URL:https://ftp.3gpp.org/Specs/archive/38_series/38.212/38212-g50.zip 38212-g50.docx> [retrieved on 20210330]
- MODERATOR (QUALCOMM INCORPORATED): "Email discussion summary for channel access mechanism for 52.6GHz-71GHz band, ver02", vol. RAN WG1, no. 20210125 - 20210205, 3 February 2021 (2021-02-03), XP052170824, Retrieved from the Internet <URL:https://ftp.3gpp.org/tsg_ran/WG1_RL1/TSGR1_104-e/Docs/R1-2101942.zip R1-2101942 8.2.6 Email discussion summary for channel access for 52.6-71GHz_v02.docx> [retrieved on 20210203]
- INTEL CORPORATION: "Remaining Issues on NR-U", 3GPP DRAFT; R1-2100628, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205, 19 January 2021 (2021-01-19), Mobile Competence Centre ; 650, route des Lucioles ; F-06921 Sophia-Antipolis Cedex ; France , XP051971098

## Description

### [Technical Field]

The present disclosure relates to a wireless communication system, and more particularly, to a method and apparatus for transmitting and receiving an uplink in a wireless communication system.

### [Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

CATT: "Channel access mechanism for up to 71GHz operation",3GPP DRAFT; R1-2100375, discloses a method whereby a switch between LBT/No-LBT channel access mode can be dynamically triggered and an explicit LBT/No-LBT mode indication can be sent to a UE, e.g., via SIB. The DCI format 1_0 in Rel-16 for unlicensed band has 2 additional bits indicating types of LBT. According to the access mode indication, a UE can adapt the channel access mechanism, so that, if No-LBT mode is indicated, the UE can consider to operate in the license frequency band, and skip to receive and demodulate the 2 additional DCI bits.

### [Disclosure]

### [Technical Problem]

The technical object of the present disclosure is to provide a method and apparatus for transmitting and receiving communication in a wireless communication system.

In addition, an additional technical object of the present disclosure is to provide a method and apparatus for transmitting and receiving an SS/PBCH block in an unlicensed band.

The technical objects to be achieved by the present disclosure are not limited to the above-described technical objects, and other technical objects which are not described herein will be clearly understood by those skilled in the pertinent art from the following description.

### [Technical Solution] The invention is defined by the appended set of claims.

According to an embodiment of the present disclosure, a method for a user equipment (UE) to perform communication in a wireless communication system may include receiving a physical broadcast channel (PBCH) from a base station; and monitoring a physical downlink control channel (PDCCH) for at least one of first downlink control information (DCI) or second DCI, and a size of the first DCI including indication information indicating a channel access type and a size of the second DCI not including the indication information are same.

A method for a base station to perform communication in a wireless communication system may include transmitting a physical broadcast channel (PBCH) to a user equipment (UE); and transmitting a physical downlink control channel (PDCCH) for at least one of first downlink control information (DCI) or second DCI to the UE, and a size of the first DCI including indication information indicating a channel access type and a size of the second DCI not including the indication information are same.

### [Technical Effects]

According to an embodiment of the present disclosure, a method and apparatus for performing uplink transmission and reception in a wireless communication system may be provided.

According to an embodiment of the present disclosure, an additional technical problem of the present disclosure is to provide a method and apparatus for transmitting and receiving an SS/PBCH block in an unlicensed band.

According to an embodiment of the present disclosure, even if whether or not an unlicensed band is not confirmed through MIB information, etc., the complexity of PDCCH blind decoding of the terminal can be reduced by matching the fall-back DCI size.

According to an embodiment of the present disclosure, transmission failure probability due to CAP failure may be reduced by increasing SS/PBCH block transmission opportunities in an unlicensed band among FR2-2 bands.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram for describing a wireless communication system supporting an unlicensed band according to an embodiment of the present disclosure.
FIG. 8, 9, and 10 are diagrams illustrating SS/PBCH block transmission in symbol level on the time axis according to an embodiment of the present disclosure.
FIG. 11 is a diagram for describing a method for a terminal to perform communication according to an embodiment of the present disclosure.
FIG. 12 is a diagram for describing a method in which a base station performs communication according to an embodiment of the present disclosure.
FIG. 13 is a diagram for describing a signaling procedure of a network side and a terminal to which the present disclosure can be applied.
FIG. 14 illustrates a block configuration diagram of a wireless communication device according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.
- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel)
- TDM: time division multiplexing
- TRP: transmission and reception point
- TRS: tracking reference signal
- Tx: transmission
- UE: user equipment
- ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

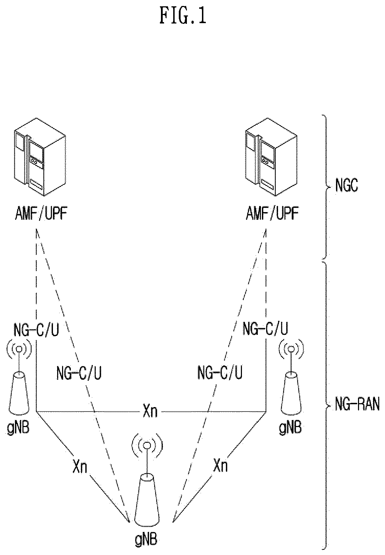

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

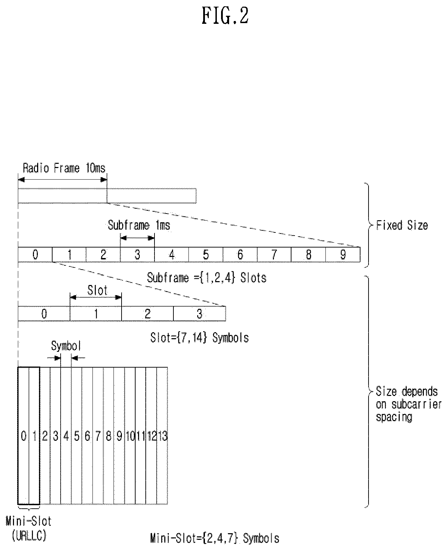

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of T_{c}=1/(Δfₘₐₓ·N_{f}). Here, Δfₘₐₓ is 480·10³ Hz and N_{f} is 4096. Downlink and uplink transmission is configured (organized) with a radio frame having a duration of T_{f}=1/(ΔfₘₐₓN_{f}/100)·T_{c}=10ms. Here, a radio frame is configured with 10 subframes having a duration of T_{sf}=(ΔfₘₐₓN_{f}/1000)·T_{c}=1ms, respectively. In this case, there may be one set of frames for an uplink and one set of frames for a downlink. In addition, transmission in an uplink frame No. i from a terminal should start earlier by T_{TA}=(N_{TA}+N_{TA,offse}t)T_{c} than a corresponding downlink frame in a corresponding terminal starts. For a subcarrier spacing configuration µ, slots are numbered in an increasing order of nₛ^{µ}∈{0,..., Nₛₗₒₜ^{subframe,µ}-1} in a subframe and are numbered in an increasing order of n_{s,f}^{µ}∈{0,..., Nₛₗₒₜ^{frame,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used. Table 3 represents the number of OFDM symbols per slot (N_{symb}^{slot}), the number of slots per radio frame (Nₛₗₒₜ^{frame,µ}) and the number of slots per subframe (Nₛₗₒₜ^{subframe,µ}) in a normal CP and Table 4 represents the number of OFDM symbols per slot, the number of slots per radio frame and the number of slots per subframe in an extended CP.

**[Table 3]**

| µ | N_{symb}^{slot} | Nₛₗₒₜ^{frame,µ} | Nₛₗₒₜ^{subframe,µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe,µ} |
|---|---|---|---|
| 2 | 12 | 40 | 4 |

FIG. 2 is an example on µ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

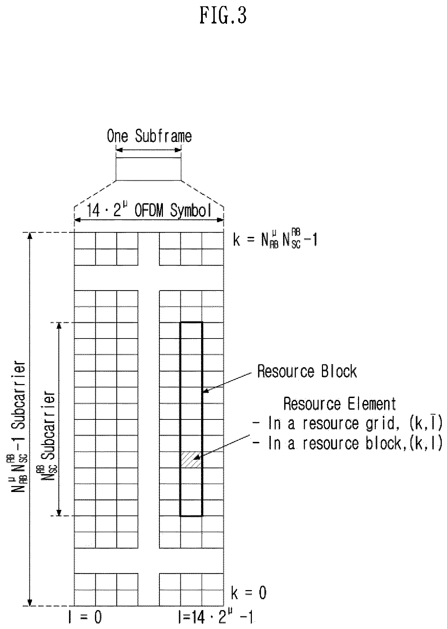

FIG. 3 illustrates a resource grid in a wireless communication system to which the present disclosure may be applied.

In reference to FIG. 3, it is illustratively described that a resource grid is configured with N_{RB}^{µ}N_{sc}^{RB} subcarriers in a frequency domain and one subframe is configured with 14·2^{µ} OFDM symbols, but it is not limited thereto. In an NR system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies. In this case, one resource grid may be configured per µ and antenna port p. Each element of a resource grid for µ and an antenna port p is referred to as a resource element and is uniquely identified by an index pair (k,l'). Here, k=0,...,N_{RB}^{µ}N_{sc}^{RB}-1 is an index in a frequency domain and I'=0,...,2^{µ}N_{symb}^{(µ)}-1 refers to a position of a symbol in a subframe. When referring to a resource element in a slot, an index pair (k,l) is used. Here, I=0,...,N_{symb}^{µ}-1. A resource element (k,l') for µ and an antenna port p corresponds to a complex value, a_{k,l'}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. [Equation 1] ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. [Equation 2] ${n}_{CRB}^{μ} = {n}_{PRB}^{μ} + {N}_{BWP , i}^{start , μ}$

N_{BWP,i}^{start,µ} is a common resource block that a BWP starts relatively to common resource block 0.

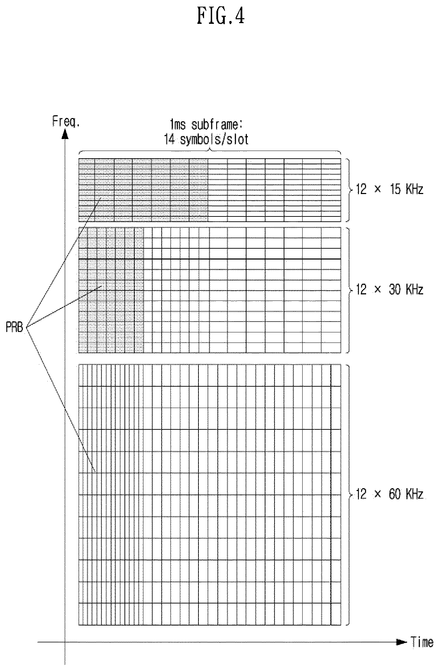

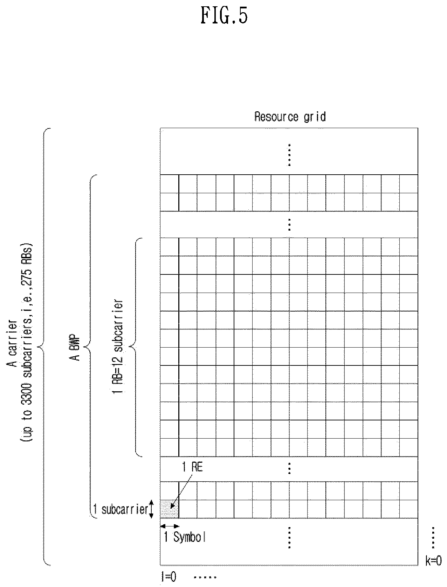

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

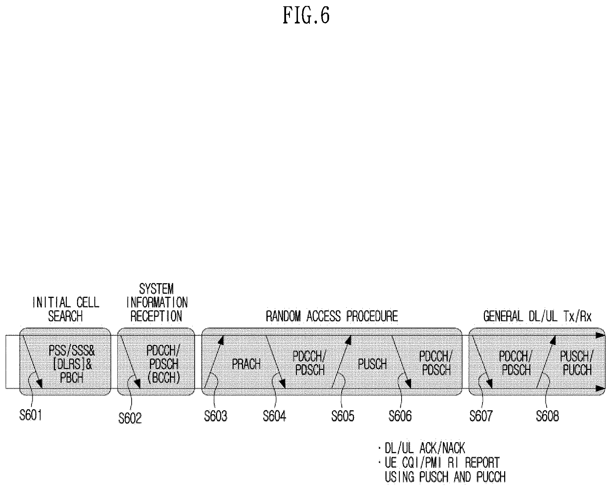

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### A wireless communication system supporting an unlicensed band/shared spectrum

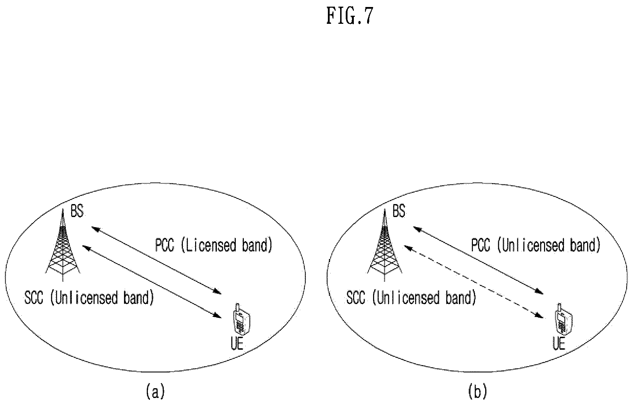

Hereinafter, a wireless communication system (e.g., an unlicensed spectrum (NR-U) system) supporting an unlicensed band applicable to the present disclosure will be described with reference to FIG. 7.

In the following description, a cell operating in a licensed-band (L-band) is defined as an LCell, and a carrier of the LCell is defined as a (downlink/uplink) LCC. In addition, a cell operating in an unlicensed band (U-band) is defined as a UCell, and a carrier of the UCell is defined as a (downlink/uplink) UCC.

The carrier/carrier-frequency of a cell may mean an operating frequency (e.g., center frequency) of the cell. A cell/carrier (e.g., a component carrier (CC)) is collectively referred to as a cell.

As shown in (a) of FIG. 7, when a user equipment (UE) and a base station transmit and receive signals through carrier aggregation (CA) LCC and UCC, the LCC may be configured as a primary CC (PCC) and the UCC may be configured as a secondary CC (SCC).

And, as shown in (b) of FIG. 7, the UE and the base station may transmit and receive signals through one UCC or a plurality of carrier-merged UCCs. That is, the UE and the base station may transmit and receive signals only through UCC(s) without LCC. For standalone operation, PRACH, PUCCH, PUSCH, SRS transmission, etc. may be supported in UCell.

For example, the unlicensed band may be included in a specific frequency range (e.g., from 52.6 GHz to 71 GHz) higher than the existing frequency range (e.g., FR1 and FR2).

The specific frequency range may be referred to as FR 2-2 (in this case, the existing FR2 (i.e., 24250 MHz - 52600 MHz) may be referred to as FR2-1) or may be referred to as FR3. The scope of this disclosure is not limited to the designations FR2-2 or FR3.

Hereinafter, an operation related to a channel access procedure (CAP) (in FR2-2) and a type thereof (i.e., a channel access type) will be described.

In describing the present disclosure, a type 1 CAP among CAP types refers to a CAP back-off with a fixed contention window size (CWS). Specifically, after the transmitting node draws a back-off counter N integer value within the value of 0 to CWS, a type 1 CAP is a CAP in which a counter value is decreased whenever it is confirmed that a channel is idle, and transmission is allowed when the corresponding back-off counter value becomes 0.

Among the CAP types, a type 2 CAP means a CAP in which transmission is allowed when it is confirmed that the channel is idle only for a specific time immediately before transmission, without a back-off process.

When a base station/UE(s) is required by (predefined) regulation for sensing a channel for availability to perform transmission on the channel, or when the base station is provided with a dedicated configuration indicating that the CAP will be performed to perform a transmission operation on the higher layer parameter 'LBT-Mode' or channel by system information block type 1 (SIB1) to the UE, a CAP for accessing a channel on which a transmission operation is performed by the base station/UE(s) may be applied.

Here, when sensing is applicable, a basic unit for performing sensing is a sensing slot having a duration (e.g., Tₛₗ=5us). When the base station or the UE senses the channel during the sensing slot period (Tₛₗ) and determines that the energy detected after the antenna assembly in the sensing slot period is less than the energy detection threshold (Xₜₕᵣₑₛ), the channel may be regarded as idle (or idle) during the sensing slot period Tₛₗ. Otherwise, the channel may be considered to be in a busy state (or in use state) during the sensing slot period (Tₛₗ).

The above-described operation may be performed at the base station, at the UE when the UE does not indicate the capability for beam correspondence without uplink beam sweeping, or at the UE when the UE uses a beam different from the beam used for transmission for sensing.

When the UE indicates capability for beam correspondence without uplink beam sweeping and the UE selects the same sensing beam(s) as the transmission beam(s), a spatial domain filter for the sensing beam may be determined.

If the channel occupation includes transmission of different beams multiplexed in the spatial domain, one of the following may be applied to corresponding sensing to perform transmission within the channel occupation.
- Type 1 CAP may be applied before channel occupation starts using a single sensing beam, and the single beam may cover all transmission beams within channel occupation. When a channel is accessed, transmission through another beam may be performed (or generated) within the channel occupancy.
- Type 1 CAP may be applied per sensing beam simultaneously and before channel occupation starts, and each sensing beam may cover a transmission beam within channel occupation. When a channel is accessed, transmission through another beam may be performed (or generated) within the channel occupancy.

If the channel occupation includes transmission of different beams multiplexed in the time domain, one of the following may be applied to corresponding sensing to perform transmission within the channel occupation.
- Type 1 CAP may be applied before channel occupation starts using a single sensing beam, and the single beam may cover all transmission beams within channel occupation. When a channel is accessed, transmission through another beam may be performed according to a procedure (e.g., a procedure according to a type 3 CAP) within channel occupancy.
- If the base station/UE can perform simultaneous sensing in different beams, type 1 CAP may be applied before channel occupation starts per sensing beam, and each sensing beam can cover a transmission beam within channel occupation. When a channel is accessed, transmission through another beam may occur according to a procedure (e.g., a procedure according to a type 3 CAP) within channel occupancy.

When the base station/UE can perform simultaneous sensing on different beams, type 1 CAP may be applied before channel occupation starts per sensing beam in which each sensing beam covers the transmission beam within the channel occupation. When a channel is accessed, transmission may occur according to a procedure (e.g., a procedure according to a type 2 CAP) before switching to another beam within channel occupancy.

Hereinafter, operations related to CAPs for each type (e.g., a type 1 CAP, a type 2 CAP, and a type 3 CAP) will be described.

For example, if a time duration spanning a sensing slot sensed to be in an idle state before transmission (s) is random based on a fixed contention window (CW) size, CAP (i.e., type 1 CAP) to be performed by the base station/UE may be performed. Type 1 CAP may be applied to all transmission operations that initiate channel occupation by a base station/UE.

After the base station/UE first detects that the channel is in an idle state during the slot period of the defer duration (Td), transmission may be performed after the counter N becomes 0 in step 4.

The counter N may be adjusted by sensing a channel for an additional sensing slot period according to the following steps.

Step 1) Set N = Nᵢₙᵢₜ and go to Step 4, where Nᵢₙᵢₜ is a random number uniformly distributed between 0 and CW.

Step 2) If N > 0 and the UE chooses to decrease the counter, set N = N-1.

Step 3) If a channel is detected during the additional slot period and the additional slot period is idle, go to step 4; otherwise, go to step 5.

Step 4) If N = 0, stop (or terminate) the CAP operation, otherwise go to step 2.

Step 5) Channel sensing until a busy slot is detected within the additional delay period or all slots in the additional delay period are detected as idle.

Step 6) If it is sensed that the channel is idle during all slots of the additional delay period, go to step 4; otherwise, go to step 5.

In the above procedure, CW may be 3, but is not limited thereto. And, the delay period (e.g., 8 us) may include a sensing slot period for performing at least a single measurement to determine whether the channel is in an idle state. The base station/UE may not perform a transmission operation through the channel for a channel occupancy time exceeding 5 ms.

As another example, when the time duration extended by the sensing slot sensed to be in an idle state before DL/UL transmission is deterministic, another type of CAP (i.e., type 2 CAP) may be performed (or applied) by the base station/UE.

For example, when type 2 CAP is applied, the BS/UE may perform transmission on a channel immediately after Td including a sensing slot having a period (Tₛₗ = 5us) in which the channel is sensed as being in an idle state.

As another example, when a type 3 CAP is applied, the BS/UE may perform a transmission operation without channel sensing.

Hereinafter, the method proposed in the present disclosure will be described in detail.

As many communication devices require greater communication capacity, efficient use of a limited frequency band in a wireless communication system is required. Among wireless communication systems, a cellular communication system may utilize a 2.4 GHz band, which is an unlicensed band, or may utilize an unlicensed band such as a 5 GHz band and/or a 60 GHz band for traffic offloading.

At this time, in the unlicensed band, since it is assumed that each communication node performs wireless communication through contention, each communication node must perform channel sensing before transmitting a signal to determine whether another communication node is performing signal transmission.

For convenience of description of the present disclosure, the operation of the communication node is referred to as a listen before talk (LBT) or a channel access procedure (CAP). In the description of the present disclosure below, LBT may be replaced with CAP.

In addition, the operation of checking whether another communication node performs signal transmission is defined as carrier sensing (CS), and a case in which it is determined that another communication node is not performing signal transmission is defined as CCA (clear channel assessment) confirmed.

In order for an eNB/gNB or a UE to transmit a signal in an unlicensed band (referred to as a U-band), LBT must be performed. And, when the eNB/gNB or UE of the LTE/NR system transmits a signal, other communication nodes, such as Wi-Fi (or wireless gigabit alliance (WiGig) such as 802.11ad/ay), should also perform LBT so as not to cause interference.

The basic wireless communication system may operate in a band below 52.6 GHz, but is not limited thereto, and may operate in a licensed band and/or an unlicensed band in a band above 52.6 GHz (e.g., 60/70 GHz band).

In the present disclosure, an initial access method including transmission/reception of an SS/PBCH block on a 52.6 GHz unlicensed band is disclosed. Specifically, the present disclosure discloses a method of increasing transmission opportunities of SS/PBCH blocks in a CAP-based unlicensed band. The methods of the present disclosure may be equally applied to licensed bands in the same band.

In a basic wireless communication system, the mmWave band (e.g., 7.125 or 24 GHz or higher, up to 52.6 GHz) may be defined as a frequency range (FR) 2 (or FR2-1), and the SCS of the SS/PBCH band in the corresponding band may be 120 or 240 kHz.

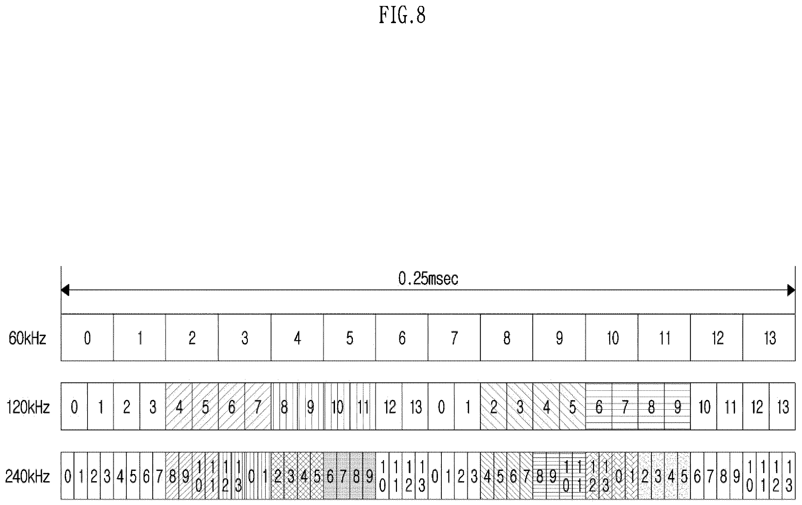

Specifically, referring to FIG. 8, transmission of up to 4 or 8 SS/PBCH blocks is possible within 0.25 ms (e.g., 2 slots based on 120 kHz SCS and 4 slots based on 240 kHz SCS). Here, FIG. 8 is a diagram showing SS/PBCH block transmission for each SCS at the symbol level on the time axis.

For example, based on 120 kHz SCS, SS/PBCH block (candidate) index n may be transmitted in symbol 4/5/6/7 of the first slot, and SS/PBCH block (candidate) index n+1 may be transmitted in symbol 8/9/10/11 of the first slot. And, SS/PBCH block (candidate) index n+2 may be transmitted in symbols 2/3/4/5 of the second slot, and SS/PBCH block (candidate) index n+3 may be transmitted in symbols 6/7/8/9 of the second slot.

As another example, based on 240 kHz SCS, SS/PBCH block (candidate) index n may be transmitted in symbols 8/9/10/11 of the first slot, and SS/PBCH block (candidate) index n+1 may be transmitted in symbols 12/13 of the first slot and symbols 0/1 of the second slot. And, SS/PBCH block (candidate) index n+2 may be transmitted in symbols 2/3/4/5 of the second slot, and SS/PBCH block (candidate) index n+3 may be transmitted in symbols 6/7/8/9 of the second slot. And, SS/PBCH block (candidate) index n+4 may be transmitted in symbols 4/5/6/7 of the third slot, SS/PBCH block (candidate) index n+5 may be transmitted in symbols 8/9/10/11 of the third slot, SS/PBCH block (candidate) index n + 6 may be transmitted in symbols 12/13 of the third slot and 0/1 of the fourth slot, and SS/PBCH block (candidate) index n+7 may be transmitted in symbols 2/3/4/5 of the fourth slot.

In this disclosure, it is assumed that the window (S_window) in which the SS/PBCH block can be transmitted is a 5 ms window. However, this is only one embodiment, and the base station may set the duration of the corresponding window to another value (e.g., 0.5/1/2/3/4 msec, etc.).

There are a total of 40 slots based on 120kHz SCS within a 5msec window, SS/PBCH may be transmitted for 8 consecutive slots, and A 2-slot gap (e.g., slots 8 to 9) may exist between 8 consecutive slots (e.g., slots 0 to 7/10 to 17). At this time, during 2 slots (e.g., slots 0 to 1/2 to 3/4 to 5/6 to 7) among 8 consecutive slots (e.g., slots 0 to 7) in which the SS/PBCH block may be transmitted, as in the 120 kHz reference case shown in FIG. 8, up to four SS/PBCH blocks may be transmitted.

Similarly, there are a total of 80 slots based on 240kHz SCS within a 5msec window, SS/PBCH blocks may be transmitted for 16 consecutive slots, and a 4-slot gap (e.g., slots 16 to 19) may exist between corresponding consecutive 16 slots (e.g., slots 0 to 15/20 to 35). At this time, during 4 slots (e.g., slots 0 to 3/4 to 7/8 to 11/12 to 15) out of 16 consecutive slots (e.g., slots 0 to 15) in which the SS/PBCH block may be transmitted, a in the 240 kHz reference case shown in FIG. 8, up to 8 SS/PBCH blocks may be transmitted.

That is, the maximum number of SS/PBCH block (candidate) indexes allowed in 120kHz and 240kHz SCS may be limited to 64, and SS/PBCH blocks actually corresponding to which index among up to 64 are transmitted may be configured by cell-specific or UE-specific RRC signaling.

Even if the wireless communication system is extended to a band (i.e., FR 3 or FR 2-2) above 52.6 GHz (e.g., 60/70 GHz), the SCS for the SS/PBCH block may be 120 kHz or 240 kHz as defined in FR2.

Additionally, considering broadband operation reaching a 2 GHz bandwidth (approximately 2.16 GHz), 480 kHz or 960 kHz may be applied as the SCS for the SS/PBCH block. This disclosure is to disclose a method of increasing transmission opportunities during operation of an unlicensed band of a corresponding SS/PBCH block.

In addition, the present disclosure discloses a method of acquiring serving cell timing, acquiring a QCL (quasi-co-location) relationship between SS/PBCH blocks, or notifying an actually transmitted SS/PBCH block (candidate) index among up to 64 SS/PBCH blocks.

In describing the present disclosure, having a QCL relationship between two SS/PBCH blocks may mean that the two SS/PBCH blocks have the same (large-scale) channel characteristics (e.g., average gain, Doppler shift, average delay, delay spread, spatial Rx parameters, etc.).

Hereinafter, a method for resolving ambiguity about the DCI payload size in the FR2-2 band will be described in detail.

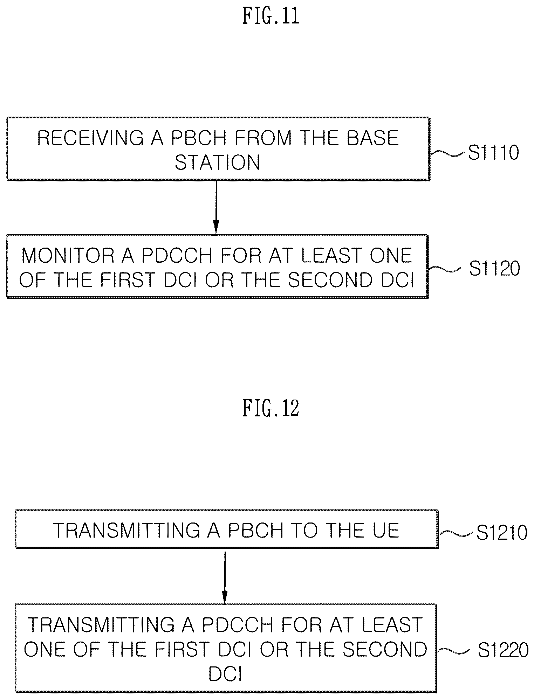

FIG. 11 is a flowchart for describing a method for a UE to perform communication according to an embodiment of the present disclosure. FIG. 11 illustrates a case in which a UE operates in a wireless communication system of the FR2-2 band. However, this is only one embodiment, and the operation described with reference to FIG. 11 may be extended and applied to operations in bands other than the FR2-2 band.

The UE may receive a physical broadcast channel (PBCH) from the base station (S1110).

Here, information indicating whether to perform listen before talk (LBT) may not be included in the PBCH (or, a master information block (MIB) transmitted through the PBCH). That is, whether to perform LBT may not be explicitly (or/and implicitly) indicated through the PBCH (or MIB).

Here, the information indicating whether to perform LBT may be replaced with information indicating whether to perform CAP or/and information indicating whether the cell belongs to a licensed band or an unlicensed band.

And, the process of receiving (or acquiring) the PBCH by the UE may be included in the process of receiving system information (SI). System information may include a MIB and a plurality of system information blocks (SIBs). System information other than MIB may be collectively referred to as Remaining Minimum System Information (RMSI).

The MIB includes information/parameters related to system information block type 1 (SIB1) reception, and may be transmitted through the PBCH of the SSB. The MIB may include a 'subCarrierSpacingCommon' field, a 'ssb-SubcarrierOffset' field, and a 'pdcch-ConfigSIB1' field.

Here, SIB1 may include information related to availability and scheduling (e.g., transmission period, SI-window size, etc.) of the remaining SIBs (hereinafter, SIBx, where x is an integer greater than or equal to 2). For example, SIB1 may inform whether SIBx is periodically broadcast or/and provided at the request of the UE by an on-demand scheme. When SIBx is provided by an on-demand method, SIB1 may include information necessary for the UE to perform an SI request. SIB1 is transmitted through the PDSCH, the PDCCH scheduling SIB1 is transmitted through the Type0-PDCCH common search space, and SIB1 may be transmitted through the PDSCH indicated by the PDCCH. And, SIBx is included in the SI message and transmitted through the PDSCH. Each SI message may be sent within a periodically occurring time window (i.e., SI-window).

The UE may monitor a physical downlink control channel (PDCCH) for at least one of the first downlink control information (DCI) or the second DCI (S1120).

Here, the UE may monitor the PDCCH in a common search space (CSS) (e.g., type 0-PDCCH CSS, etc.). And, at least one of the first DCI or the second DCI may be scrambled by a cyclic redundancy check (CRC) by a system information (SI)-radio network temporary identifier (RNTI).

The size of the first DCI including indication information indicating the channel access type (or LBT type) may be the same as the size of the second DCI not including the indication information (e.g., information corresponding to the 'ChannelAccess-CPext' field).

That is, when whether or not LBT is performed through the PBCH (or MIB) is not configured, a specific bit (e.g., 2 bits or 1 bit) may be added to the DCI detected through PDCCH monitoring.

For example, the size of at least one reserved bit of the first DCI or the second DCI may be 16 bits or 17 bits. The size of the indication information may be 1 bit or 2 bits. Here, the indication information (or/and the size of the indication information) may be the same as a specific bit (or/and the size of the specific bit) added to the DCI.

The UE may be indicated/configured whether to perform LBT through a system information block (SIB) received from the base station. And, based on receiving an indication/configuration whether or not to perform LBT through the SIB, the UE may detect the first DCI or the second DCI through PDCCH monitoring.

For example, the PDCCH may be monitored for the first DCI based on being configured (configuration) to perform LBT through the SIB. That is, when it is configured to perform LBT through the SIB, the UE may be monitored for the first DCI including indication information indicating the channel access type (or LBT type).

As another example, based on the configuration not to perform LBT through the SIB, it may be monitored for a second DCI that does not include indication information. Based on the second DCI being monitored (or detected), the UE may ignore (or disregard) a bit corresponding to a position of indication information in the second DCI. That is, the UE may ignore the specific bit included in the second DCI without using it for indicating the channel access type (or LBT type).

FIG. 12 is a flowchart for describing a method in which a base station performs communication according to an embodiment of the present disclosure. FIG. 12 illustrates a case in which a base station operates in a wireless communication system of the FR2-2 band. However, this is only one embodiment, and the operation described with reference to FIG. 12 may be extended and applied to operations of bands other than the FR2-2 band.

The base station may transmit the PBCH to the UE (S1210). Here, the PBCH may not include information indicating whether to perform LBT. That is, whether to perform LBT may not be explicitly (or/and implicitly) indicated through the PBCH (or MIB).

The base station may transmit a PDCCH to the UE for at least one of the first DCI or the second DCI (S1220). That is, the UE may monitor the PDCCH for at least one of the first DCI or the second DCI.

Here, the size of the first DCI including information indicating the channel access type (or LBT type) and the size of the second DCI not including the indication information may be the same. Since the description of the size of the first DCI and the second DCI has been described with reference to FIG. 11, duplicate descriptions will be omitted.

The base station may indicate/configure whether to perform LBT for the UE through the SIB. The DCI detected by the UE may be different through the SIB transmitted by the base station. For example, based on being configured to perform LBT through SIB, the UE may detect the first DCI through PDCCH monitoring. As another example, based on the configuration that LBT is not performed through the SIB, the UE may detect the second DCI through PDCCH monitoring.

Hereinafter, an embodiment related to an initial access process including SS/PBCH block transmission and reception operations in an unlicensed band will be described in detail.

### Embodiment 1

An LBT scheme performed by the base station may be configured (or signaled) through a downlink (DL) signal/channel (e.g., SS / PBCH block, etc.) for the UE (during a specific period).

A base station (operating in a specific unlicensed band of FR3 (or FR2-2)) may be allowed to transmit without determining whether a channel is idle/busy according to a specific situation (e.g., according to situations in which the interference level is low, the downlink success rate is high, the collision frequency is determined to be low, the transmission frequency is low, the transmission power is low, etc.).

In describing the present disclosure, the LBT scheme in which transmission is allowed without determining whether the channel is idle/busy is referred to as LBT scheme A, and the LBT scheme in which transmission is allowed only when the channel is determined to be idle is referred to as LBT scheme B.

Alternatively, it may be configured (or signaled) whether a plurality of transmission opportunities are given to the SS/PBCH block QCLed within the S_window for the UE.

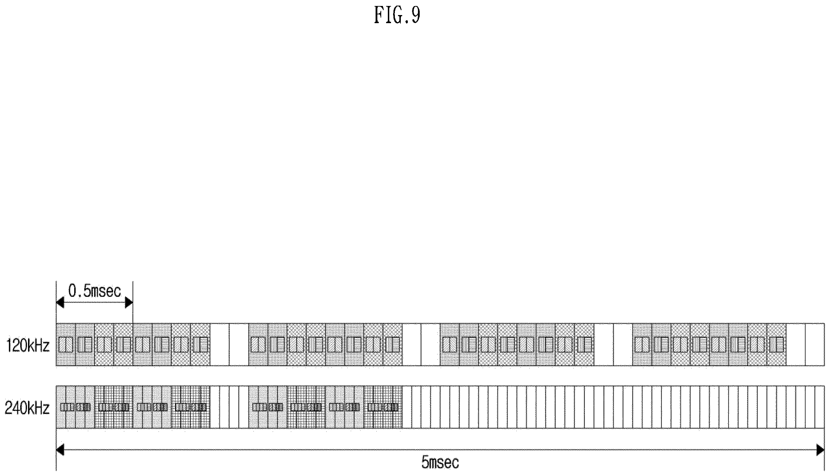

For example, in the case of 120 kHz SCS, as shown in FIG. 9, SS/PBCH block (candidate) indexes 0 to 63 may be defined within the 5 msec window. And, if the value of the QCL parameter (i.e., QCL_para) is 32, within the corresponding 5 msec window, SS/PBCH block (candidate) index #N (N<32) and SS/PBCH block (candidate) index #N+32 may have a QCL relationship with each other.

That is, by providing an opportunity to be transmitted twice for the SS/PBCH block having the same beam within a 5 msec window, LBT failure of the base station may be compensated.

For convenience of description of the present disclosure, DBTW_on is defined as a mode in which multiple transmission occasions can be given for the QCLed (QCLed) SS/PBCH block within S_window (or discovery burst transmission window, DBTW) (i.e., the QCL_para value may be configured), and DBTW_off is defined as everything in which the UE cannot assume a QCL relationship between different candidate SS/PBCH block indices.

At this time, the base station may indicate/configure the UE whether the LBT scheme performed by the base station is LBT scheme A or LBT scheme B through higher layer signaling (e.g., cell-specific RRC signaling, UE-specific RRC signaling, MAC (medium access control)-CE (control element)) or (UE-specific or group-common) DCI.

Alternatively, the base station may indicate whether the current mode is DBTW_on or DBTW_on to the terminal through higher layer signaling or DCI.

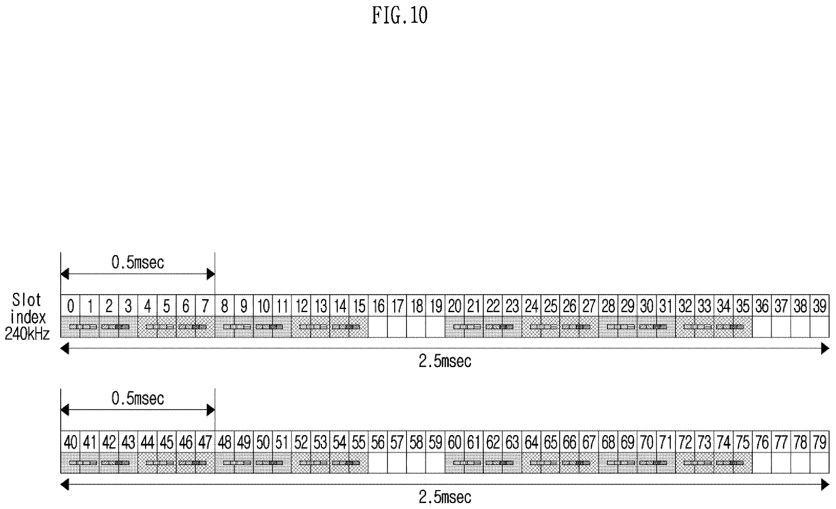

When LBT scheme B is configured/indicated as the LBT scheme performed by the base station (or when DBTW_on is configured/indicated), as shown in FIG. 10, multiple transmission occasions may be given for SS/PBCH blocks QCLed within S_window. In addition, the UE may assume that some of them may be transmitted from the base station according to the success/failure of the LBT of the base station. Accordingly, in performing a measurement operation such as RLM/RRM through the SS/PBCH block (within S_window), the UE may perform the measurement operation in the entire duration within S_window.

For example, the UE may utilize all of the SS/PBCH block (candidate) indexes in QCL relationship with a specific SS/PBCH block (candidate) index for radio link monitoring corresponding to the corresponding SS/PBCH block (candidate) index. Here, the specific SS/PBCH block (candidate) may include the SS/PBCH block for which the MIB has been obtained (by the UE).

In addition, radio link monitoring may include pass loss (PL) estimation of PUSCH/SRS based on the SS/PBCH block. In this case, the UE may calculate the PL using RS resources obtained from the SS/PBCH (candidate) block(s) having the same SS/PBCH block index used when acquiring the MIB.

As another example, when LBT scheme A is configured/indicated as the LBT scheme performed by the base station (or, when DBTW_ off is configured/indicated), the UE may assume that only certain QCL_para (or 64 (without signaling for QCL_para)) SS/PBCH blocks are transmitted (within S_window).

That is, when QCL_para is configured/indicated to be 64, the UE may expect only SS/PBCH reception of SS/PBCH block (candidate) indexes 0 to 63 in FIG. 10. Since the base station will use the LBT scheme A, it may always be possible to transmit DL signals such as SS/PBCH blocks. Due to this, in performing measurements such as RLM/RRM through the SS/PBCH block (within S_window), the UE may perform measurement only during a specific (compressed) duration within S_window and may not perform measurement for the remaining duration, and thus power consumption may be reduced.

If LBT scheme A is configured/indicated as the LBT scheme performed by the base station (or DBTW_ off is set / instructed), during a specific duration, the indicated LBT scheme (or LBT scheme A) may be valid, and the specific interval may be defined in advance (e.g., a period in which SIB information can be modified, 1 sec) or configured.

When the specific period expires, the UE may assume LBT scheme B (or DBTW_on). In addition, the LBT scheme indication may be indicated through a UE-common or UE-specific higher layer (e.g., RRC signaling such as 'MeasObjectNR IE (Information Element)') (or DBTW_on or DBTW_off indication) for a serving cell as well as a neighbor cell.

In addition, when LBT scheme A (or DBTW_off) is indicated for a neighboring cell, RRM measurement may be performed only for SS/PBCH blocks as many as the QCL_para value (or up to 64) of the cell within S_window (e.g., from the start of S_window), and during remaining durations, RRM measurement may not be performed.

Similarly, the LBT scheme indication (or DBTW_on or DBTW_off indication) may be indicated through UE-common or UE-specific higher layer signaling (e.g., RRC signaling such as 'MeasObjectNR IE') for inter-frequency measurement and/or SCell addition.

Corresponding signaling may be commonly indicated for a specific frequency (or frequency band or frequency carrier) (option 1) or may be indicated for each specific (neighboring) cell (option 2). When both option 1 and option 2 are configured for a specific frequency-specific cell, the UE may prioritize option 2 (i.e., cell-specific signaling) for the cell and ignore option 1.

Specifically, when DBTW_off (or LBT scheme A) is indicated/configured for a specific frequency, the UE may expect that the QCL_para value is not configured for that frequency or may ignore it even if it is configured.

Alternatively, if DBTW_off (or LBT scheme A) is indicated/configured for a specific cell, the UE expects that the QCL_para value for the cell or for the frequency at which the cell is located may be ignored even if it is configured or not expected to be configured. At this time, the fact that the UE expects that the QCL_para value is not configured or is ignored even if it is configured may mean that the UE cannot assume a QCL relationship between different candidate SS/PBCH block indices. Conversely, the UE may expect that the QCL_para value is configured only for the cell or frequency for which DBTW_on (or LBT scheme B) is configured.

In addition, the method of monitoring the Type0-PDCCH CSS set may vary according to the indicated LBT scheme (or whether indicated DBTW_on or DBTW_off).

For example, if LBT scheme B is configured/indicated (or DBTW_on is configured/indicated), the UE may assume that a Type0-PDCCH CSS set corresponding to all SS/PBCH block (candidate) indices in QCL relationship with a specific SS/PBCH block (candidate) index (within S_window) may be transmitted.

On the other hand, if LBT scheme A is configured/indicated (or DBTW_off is configured/indicated), the UE may assume that only the Type0-PDCCH CSS set corresponding to one of a plurality of SS/PBCH block (candidate) indexes in a QCL relationship with a specific SS/PBCH block (candidate) index (e.g., the first SS/PBCH block (candidate) index in QCL relationship with a specific SS/PBCH block (candidate) index within S_window) can be transmitted (within S_window).

In this disclosure, the first SS/PBCH block (candidate) index in the QCL relationship with a specific SS/PBCH (candidate) index within S_window may mean as many SS/PBCH blocks as the first number of QCL_para (or the first 64) within S_window.

In addition, the PDSCH reception method may vary according to the indicated LBT scheme (or indicated DBTW_on or DBTW_off).

When LBT scheme B is indicated (or DBTW_on is indicated), the UE may assume that PDSCH mapping is not available for resources (e.g., RBs) of all SS/PBCH block (candidate) indices in a QCL relationship with a specific SS/PBCH block (candidate) index (within S_window).

For example, although a codeword carried on the PDSCH is generated considering the amount of all resources (e.g., RBs) allocated for PDSCH transmission, when a resource (e.g., RB) allocated for PDSCH transmission overlaps with a resource (e.g., RB) of an SS/PBCH (candidate) in a QCL relationship with a specific SS/PBCH block (candidate), PDSCHs may not be mapped to overlapping resources (e.g., RBs). Here, the specific SS/PBCH (candidate) index may include the SS/PBCH block (candidate) index that the base station informs the UE that it is actually transmitted.

As another example, when LBT scheme A is indicated (or DBTW_off is indicated), the UE may assume that PDSCH mapping is not available only for one of a plurality of SS/PBCH block (candidate) indexes in a QCL relationship with a specific SS/PBCH block (candidate) index (within S_window) (e.g., the resource of the first SS/PBCH block (candidate) index in QCL relationship with a specific SS/PBCH block (candidate) index within S_window (e.g., RB)) and that PDSCH mapping is available for resources of the remaining SS/PBCH block (candidate) indexes (e.g., RB) in the QCL relationship.

Accordingly, when the resources (e.g., RB) and the PDSCH resources (e.g., RB) of the remaining SS/PBCH block (candidate) indexes in the QCL relationship overlap, all resources (e.g., RBs) allocated for PDSCH may have PDSCH mapping.

And, the PDSCH time domain resource allocation (TDRA) method may vary according to the LBT scheme (or indicated DBTW_on or DBTW_off). The UE may receive PDSCH scheduling according to a default TDRA table before a specific TDRA table is set by the base station. Here, the default TDRA table may be defined differently depending on whether shared spectrum access is operated.

For example, when LBT scheme B is indicated (or DBTW_on is indicated), the UE may receive PDSCH scheduling through a default TDRA table defined for shared spectrum access operation before a specific TDRA table is set from the base station.

As another example, when LBT scheme A is indicated (or DBTW_off is indicated), the UE may receive PDSCH scheduling through a default TDRA table defined for operations other than shared spectrum access before a specific TDRA table is configured from the base station.

Each TDRA table includes a plurality of columns, and each column may include at least one of (1) a DMRS symbol index within a slot, (2) a PDSCH mapping type, (3) a PDCCH-to-PDSCH slot offset, (4) a PDSCH start symbol index within a slot, and (5) the number of PDSCH symbols.

### Embodiment 2

A synchronization raster in which an SS/PBCH block can be transmitted may be differently defined to indicate (or inform) whether DBTW_on or DBTW_off is applied.

For example, when synchronous raster set #1 (e.g., the set that are DBTW_off or the set related to licensed bands) and synchronous raster set #2 (e.g., the set that are DBTW_on, or the set that relate to unlicensed bands) can be defined in FR3 (or FR2-2), if an SS/PBCH block based on a synchronization raster belonging to synchronization raster set #1 is found, the UE may recognize it as the same SS/PBCH block as FR2.

As another example, if an SS/PBCH block based on a synchronization raster belonging to synchronization raster set #2 is found, the UE may recognize this as an enhanced SS/PBCH block in FR3 (or FR2-2) (unlike FR2 operation).

In this case, the RB offset value between the SS/PBCH block and CORESET #0 may be different for each synchronization raster set. For convenience of description of the present disclosure, when an index set that can indicate RB offset values between the SS/PBCH block and CORESET #0 is referred to as SET_RB, when receiving a specific value among indexes belonging to SET_RB, the UE may estimate the location of CORESET #0 by using the RB offset value from the SS/PBCH block location.

That is, SET_RB linked to the SS/PBCH block based on the synchronization raster belonging to synchronization raster set #1 and SET_RB linked to the SS/PBCH block based on the synchronization raster belonging to synchronization raster set #2 may be configured separately.

### Embodiment 3

When the SS/PBCH block in the initial access stage is composed of only 120 kHz SCS and the SS/PBCH block of 480 kHz SCS or 960 kHz SCS is not used for initial access but is used for ANR (automatic neighbor relation), the PBCH in the SS/PBCH block of the 480 kHz SCS or the 960 kHz SCS may contain information about the location of the SS/PBCH block of the 120 kHz SCS and/or CORESET index 0 (and type0-PDCCH common search space set) and/or information related to the global cell ID (for providing SIB1 information within the same cell).

Specifically, since the SS/PBCH block of the 480/960 kHz SCS is not used for initial access, it may be transmitted using a location other than the synchronization raster as a center frequency. Accordingly, the base station may need to provide CORESET#0 frequency resource information through an SS/PBCH block rather than a synchronization raster.

Different operators may coexist in unlicensed bands, and an unplanned deployment environment may be formed even for the same operator. Therefore, Cell IDs (physical) used between cells in the same band may be the same.

In order to prevent confusion of UEs that may be caused by this, (even for SS/PBCH blocks not transmitted in synchronous raster), the base station may transmit information about CORESET#0 and type0-PDCCH CSS set for higher layer signaling (e.g., SIB1) containing operator ID or/and PLMN ID or/and global cell ID information to the UE.

For example, it may be assumed that a measurement report for the purpose of 'reportCGI' is configured in measurement configuration. SS/PBCH block transmission for this purpose may be collectively referred to as ANR use.

Therefore, through the PBCH payload in the SS/PBCH block of the 480/960 kHz SCS, frequency axis offset information between the corresponding SS/PBCH block and the SS/PBCH block of the 120 kHz SCS (e.g., number of REs and/or number of RBs and/or synchronous raster index information) may be transmitted. And, the offset information may be based on 120 kHz SCS (or SCS of SS/PBCH block containing PBCH payload).

For example, the RE may be based on the SCS of the SS/PBCH block containing the PBCH payload, and the RB may be based on the 120 kHz SCS. The UE may receive the SIB1 PDCCH/PDSCH through the PBCH information in the SS/PBCH block of the 120 kHz SCS through the corresponding information.

The UE may report the received corresponding SIB1 information (e.g., ANR related information such as NCGI(s) (NR Cell Global Identifier)/ECGI(s)(extended CGI), TAC(s) (tracking area code), RANAC(s) (RAN-based Notification Area Code), PLMN ID(s) (Public Land Mobile Network), etc.) to the base station.

In the frequency resource location for the SS/PBCH block of the 120 kHz SCS, physical cell ID information (or some (bits) information of ID) to be transmitted in the corresponding PSS/SSS may be transmitted through the PBCH payload in the SS/PBCH block of the 480/960 kHz SCS. This is to inform the base station of the SS/PBCH block to be received among the plurality of SS/PBCH blocks (or transmitted by the same base station as the base station transmitting the SS/PBCH block of 480/960 kHz SCS) when a plurality of SS/PBCH blocks are found in the corresponding frequency resource location.

The UE may receive SIB1 information linked to the SS/PBCH block corresponding to the indicated physical cell ID information at a frequency resource location where the SS/PBCH block of the 120 kHz SCS can be transmitted, and may report the acquired corresponding SIB1 information to the serving cell.

Alternatively, resource information of 120 kHz SCS-based CORESET index 0 (and type0-PDCCH CSS set) may be directly transmitted through the PBCH payload in the SS/PBCH block of 480/960 kHz SCS. Through this, the UE may receive the SIB1 PDCCH/PDSCH without receiving the SS/PBCH block of the 120 kHz SCS.

At this time, the information of the 120kHz SCS-based CORESET index 0 may include the RE/RB offset between the SS/PBCH block of the 480/960 kHz SCS (e.g., this may be based on the 120 kHz SCS or the SCS of the SS/PBCH block containing the PBCH payload, and the reference SCS may vary depending on the RE/RB) and the CORESET, and the time/frequency domain occupied by the CORESET (e.g., X RB(s), Y symbol).

In addition, the 120 kHz SCS-based type0-PDCCH CSS set information is information about a SIB1 PDCCH monitoring occasion, and may include the number of occasions per slot, symbol position information of the corresponding occasion in a slot, and the like.

SIB1 information (e.g., ANR related information such as NCGI(s) (NR Cell Global Identifier)/ECGI(s)(extended CGI), TAC(s) (tracking area code), RANAC(s) (RAN-based Notification Area Code), PLMN ID(s) (Public Land Mobile Network), etc.) obtained based on the resource information of the corresponding CORESET index 0 (and the type0-PDCCH CSS set) may be reported to the base station.

Characteristically, (even if there is no indicator in the PBCH payload indicating a separate SCS value) the location and/or CORESET index 0 (and/or type0-PDCCH common search space set) information of the SS/PBCH block provided in the PBCH within the 480 and/or 960 kHz SCS-based SS/PBCH block may include information about a 120 kHz SCS-based SS/PBCH block and/or a CORESET index 0 (and/or a type0-PDCCH common search space set).

As another example, ANR-related information (e.g., NCGI(s)/ECGI(s), TAC(s), RANAC(s), PLMN ID(s), etc.) may be directly carried in the PBCH payload in the SS/PBCH block of the 480/960 kHz SCS. For example, the entire NCGI information (or some (e.g., LSB X bits) information) may be included in the PBCH payload in the SS/PBCH block of the 480/960 kHz SCS, and the UE receiving the corresponding information may report the NCGI related information to the serving base station (requesting the ANR).

### Embodiment 4

When 120 kHz (and/or 240 kHz) as well as 480 kHz (and/or 960 kHz) are applied as the SCS of the SS/PBCH block in the FR3 (or FR2-2) band, the number/combination of (candidate) SS/PBCH blocks and/or the DBTW_on/off setting method may be configured for each SCS.

That is, the number/combination of (candidate) SS/PBCH blocks corresponding to SS/PBCH blocks for each SCS may be individually configured. In addition, whether to apply DBTW_on or DBTW_off corresponding to the SS/PBCH block for each SCS may be individually configured.

Specifically, when explicit signaling about whether to apply DBTW_on or DBTW_off is not configured, the UE may assume that DBTW_on is applied to the 120 kHz (and/or 240 kHz) SCS SS/PBCH block and DBTW_off is applied to the 480 kHz and/or 960 kHz SCS SS/PBCH block.

At this time, the SS/PBCH block of the initial access stage is composed of only 120 kHz SCS (and/or 240 kHz SCS), and the SS/PBCH block of 480 kHz SCS or 960 kHz SCS may not be used for initial access.

### Embodiment 5

Within one cell, SS/PBCH blocks having different numerologies may be configured (for each BWP or within the same BWP). For example, SS/PBCH block reception of 120 kHz SCS may be set in initial BWP#0, and SS/PBCH block reception of 480 kHz SCS (or 960 kHz SCS) may be set in BWP#1 in the same cell.

For example, if BWP#1 is switched to BWP#0 while performing RRM measurement based on the SS/PBCH block of 480 kHz SCS (or 960 kHz SCS) (configured for RRM measurement, etc.), a QCL relationship may be established between the SS/PBCH block index of 120 kHz SCS and the SS/PBCH block index of 480 kHz SCS (or 960 kHz SCS) so that the UE can continue to perform operations such as RRM measurement.

That is, it may be configured that the SS/PBCH block (candidate) index n of 120 kHz SCS and the SS/PBCH block (candidate) index m of 480 kHz SCS (or 960 kHz SCS) are in a QCL relationship with each other. Alternatively, a rule may be established so that a QCL relationship can be assumed between the same (candidate) indices.

The above-described method can be extended and applied to operations such as radio link monitoring, candidate beam detection, beam failure detection, and beam management, as well as RRM measurement operations. In addition, it may be extended and applied not only to the serving cell (PCell and/or PSCell and/or SCell) but also from the viewpoint of neighbor cell measurement.

Alternatively, considering signaling complexity, when the SS/PBCH block of the initial access stage is limited to 120 kHz SCS, 480 kHz SCS or 960 kHz SCS-based SS/PBCH blocks may be configured so that only SCells (not PCells or PSCells) may be configured.

Hereinafter, a method of performing SSB-to-RO mapping based on an SS/PBCH block when PRACH occasions are configured even in BWP#1 other than the initial BWP will be described.

When it is assumed that a plurality of SCSs are applied in the initial access step of the UE, the number of SCS values to be applied to the SS/PBCH block in the initial access step can be minimized in consideration of implementation complexity.

For example, the SS/PBCH block of the initial access stage may be limited to 120 kHz SCS. As another example, after initial access (depending on whether the UE supports it), a separate dedicated BWP (e.g., BWP # 1) other than the minimum BWP may be configured to 480 kHz SCS (or 960 kHz SCS).

When SSB-to-RO mapping is performed for the PRACH configured in dedicated BWP#2 (or BWP#1 with 480kHz SCS (or 960kHz SCS) SS/PBCH block), SSB-to-RO mapping may be performed (alt 1) based on the 120kHz SCS SS/PBCH block, SSB-to-RO mapping may be performed based on the 480kHz SCS (or 960kHz SCS) SS/PBCH block (alt 2), or SSB-to-RO mapping may be performed (alt 3) based on higher layer signaling for configuring the reference SCS SS/PBCH block. Alternatively, SSB-to-RO mapping may be performed based on the SCS of the configured RACH (i.e., based on the SS/PBCH block of the same SCS as the RACH SCS).

As another example, when SSB-to-RO mapping is performed for a PRACH configured in BWP#1 in which a 480 kHz SCS (or 960 kHz SCS) SS/PBCH block is configured, SSB-to-RO mapping may be performed based on the SS/PBCH block configured in the first BWP (opt 1), SSB-to-RO mapping may be performed based on the SS/PBCH block configured in the same (active) BWP (opt 2), or SSB-to-RO mapping may be performed (opt 3) based on higher layer signaling configured based on any BWP among the same (active) BWPs as the initial BWP.

### Embodiment 6

Embodiment 6 discloses a method in which 64 or more SS/PBCH block (candidate) indexes and/or QCL_para and/or ANR information, etc. are transmitted through a PBCH payload.

Table 6 below discloses a configuration of 23 bits excluding 'BCCH-BCH-Message' among MIBs (24 bits), and Table 7 discloses a PBCH payload. Here, the PBCH payload may be composed of MIB (24 bits) and additional 8 bits, resulting in a total of 32 bits.

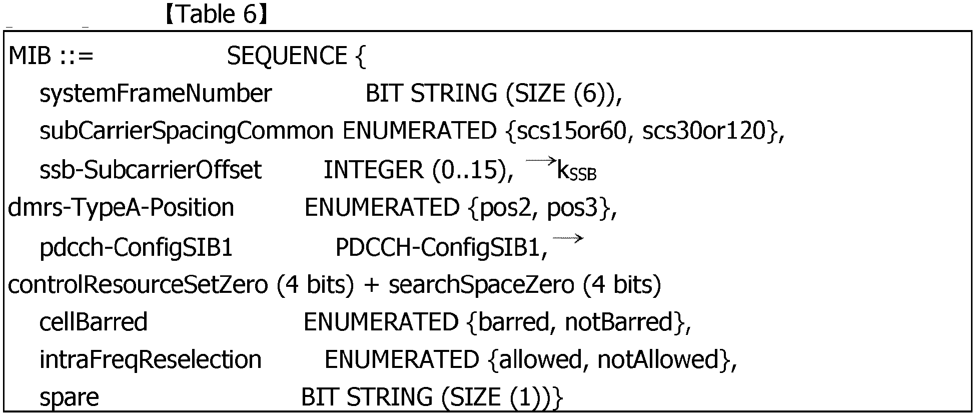

**[Table 7]**

| | |
|---|---|
| *a̅_̅{̅A̅}̅ a̅*_{*A̅+*1} *̅a̅*̅_{A̅*+*2} *̅a̅*̅_{A̅*+*3} | 4th, 3rd, 2nd, 1st LSB of SFN |
| *a̅*_{*A̅+*4} | half frame bit |
| *a̅*_{*A̅+*5} | In case of FR2, 6th bit of SS/PBCH block index |
| *a̅_{A̅+6}* | In case of FR2, 5th bit of SS/PBCH block index |
| *a̅_{A̅+7}* | In case of FR2, 4th bit of SS/PBCH block index |

As an embodiment of the present disclosure, when the SS/PBCH block of 480kHz SCS or 960kHz SCS is not used for initial access but can be used for ANR purposes, NCGI entire information (or part (e.g., LSB X bits) information) may be transmitted based on 29 bits (or part thereof) excluding *a̅*_{*A̅+*5}*, a̅*_{*A̅+*6}*, a̅*_{*A̅+*7}*.* In this case, *a̅*_{*A̅+*5}*, a̅*_{*A̅+*6}, *a̅*_{*A̅+*7} may be used to obtain an SS/PBCH block index of a neighboring cell when a measurement operation is performed on the neighboring cell.

When receiving an SS/PBCH block of 120 kHz SCS (or 240 kHz SCS), the PBCH payload may be interpreted as shown in Tables 6 and 7 above (or with some bit(s) changed for other purposes). And, when receiving an SS/PBCH block of 480 kHz SCS or 960 kHz SCS, the PBCH payload may be interpreted as 29 bits (or part thereof) excluding *a̅*_{*A̅+*5}*, a̅_{A̅+6}, a̅*_{*A̅*+7} for ANR purposes.

As another embodiment of the present disclosure, MIB 1 bit corresponding to 'dmrs-TypeA-Position' may be replaced with a purpose of expressing QCL_para or candidate SS/PBCH block index. In this case, the UE may assume that the location of the DMRS upon reception of PDSCH mapping type A is the third symbol (or the fourth symbol) until a separate setting for the location of the DMRS upon reception of PDSCH mapping type A is received.

As another embodiment of the present disclosure, a method similar to the above-described embodiment (embodiments related to 'dmrs-TypeA-Position') may also be applied to 'subCarrierSpacingCommon', 'ssb-SubcarrierOffset', 'pdcch-ConfigSIB1', 'cellBarred', and/or 'intraFreqReselection'.

For example, MIB 1 bit corresponding to 'subCarrierSpacingCommon' may be replaced with a purpose of expressing QCL_para or candidate SS/PBCH block index. At this time, an SCS for a PDSCH scheduled by CORESET#0 and a PDCCH within the corresponding CORESET may be defined according to a predetermined rule.

For example, in the case of a 120 kHz SCS or 240 kHz SCS SS/PBCH block, the SCS for the PDSCH may be defined as 120 kHz SCS. In the case of a 480 kHz SCS SS/PBCH block, the SCS for the PDSCH may be defined as 480 kHz SCS. In the case of a 960 kHz SCS SS/PBCH block, the SCS for the PDSCH may be defined as 960 kHz SCS.

As another example, MIB 4 bits (or some bit(s) thereof) corresponding to 'ssb-SubcarrierOffset' may be substituted for the purpose of expressing QCL_para or candidate SS/PBCH block index. At this time, the 'ssb-SubcarrierOffset' value (e.g., '0000') may be defined according to a predetermined rule.

As another example, MIB 8 bits (or some bit(s) thereof) corresponding to 'pdcch-ConfigSIB1' may be substituted for the purpose of expressing QCL_para or candidate SS/PBCH block index.

As another example, MIB 1 bit corresponding to 'cellBarred' or 'intraFreqReselection' may be replaced with a purpose of expressing QCL_para or a candidate SS/PBCH block index. At this time, the UE may acquire 'cellBarred' or 'intraFreqReselection' information through higher layer signaling such as SIB1 or other system information after initial access.

### Embodiment 7

In Embodiment 7, when the SCS of the SS/PBCH block is configured to SCS_b, an ANR support method when configuration information for CORESET#0 and type0-PDCCH CSS set of SCS_b (i.e., the same SCS as SS/PBCH block) is not given in the corresponding SS/PBCH block is disclosed.

As an embodiment (opt 1) of the present disclosure, ANR related information (e.g., at least one of NCGI(s)/ECGI(s), TAC(s), RANAC(s), or PLMN ID(s)) may be directly transmitted through the PBCH payload. At this time, if the PBCH payload is not sufficient to carry all of the corresponding information, the corresponding ANR-related information may be divided into N (N>1) PBCHs and transmitted.

In another embodiment (opt 1-1) of the present disclosure, PBCHs corresponding to N (candidate) SS/PBCH block indices may be divided and transmitted within the same SS/PBCH block period. In this case, a method of grouping N indexes among all M (candidate) SS/PBCH block indexes may be defined in advance. For example, when M = 64 and N = 2, PBCHs corresponding to an index of mod (M, N) = 0 and an index of mod (M, N) = 1 may be divided and transmitted.

In another embodiment (opt 1-2) of the present disclosure, ANR related information may be divided and transmitted over N SS/PBCH block periods. For example, when N=2, ANR information may be divided into a PBCH within the k-th SS/PBCH period and a PBCH within the k+1-th SS/PBCH period and transmitted. In particular, in order to resolve the ambiguity of the order in which ANR information divided into N pieces is loaded, an indicator indicating that the first, second, ... Nth information may be added to each PBCH.

For example, when ANR information is divided into N PBCHs and transmitted, each detailed information included in the ANR information may be 1) transmitted every N times, 2) transmitted only part of N times (e.g., 1 time), or 3) divided into N times and transmitted. For example, among the ANR information, 'mcc' and/or 'mnc' may be transmitted in every PBCH, 'cellIdentity' may be divided into N and transmitted, and 'cellReservedForOperatorUse' may be transmitted only once.

As another embodiment (opt 2a) of the present disclosure, information of an SS/PBCH block based on SCS_sib1 (e.g., 120 kHz) rather than SCS_b (e.g., 480 or 960 kHz) may be provided.

Here, the SS/PBCH block based on SCS_sib1 may mean that configuration information on CORESET#0 and the type0-PDCCH CSS set can be given in the corresponding SS/PBCH block. That is, through the PBCH payload in the SS/PBCH block based on SCS_b, a frequency axis position at which the SCS_sib1-based SS/PBCH block will be transmitted (e.g., center frequency of SS/PBCH block based on SCS_sib1) and/or PSS/SSS cell ID information to be transmitted in the SCS_sib1-based SS/PBCH block (e.g., one of a total of 1008 cell IDs) may be indicated.

Upon receiving this, the UE may move to the corresponding frequency axis resource, search for SCS_sib1-based SS/PBCH block containing the same ID information as the corresponding PSS/SSS cell ID, receive SIB1 via CORESET#0 and type0-PDCCH CSS set provided in the corresponding SCS_sib1 based SS/PBCH block, and then report ANR information included in the corresponding SIB1 to the serving base station.

If SCS_sib1-based SS/PBCH block containing the same ID information as the corresponding PSS/SSS cell ID is not found within a certain time by moving to the corresponding frequency axis resource, or if it is found, but the configuration information for the CORESET#0 and type0-PDCCH CSS set is not actually given in the corresponding SS/PBCH block, the UE may report 'no SIB1' to the serving base station.

As another embodiment (opt 2b) of the present disclosure, in the SS/PBCH block based on SCS_b (e.g., 480 or 960 kHz), information on CORESET#0 based on SCS_sib1 (e.g., 120 kHz) and type0-PDCCH CSS set may be provided.

Specifically, information on CORESET#0 and type0-PDCCH CSS set may be signaled similarly to FR2 operation, and the location of the frequency axis of the SS/PBCH block based on SCS_sib1, which is necessary for determining the RB location of CORESET#0, may be separately signaled through the PBCH payload.

Alternatively, the location of the frequency axis of the SS/PBCH block based on SCS_sib1 required for determining the location of the RB of CORESET#0 may be signaled similarly to the operation of FR2, and information on CORESET#0 and the type0-PDCCH CSS set may be separately signaled through the PBCH payload. In addition, when receiving SCS_sib1-based CORESET#0 and type0-PDCCH CSS set after receiving SCS_b-based SS/PBCH block, a beam connection relationship between the SS/PBCH block based on SCS_b and CORESET#0 based on SCS_sib1 may be established. Accordingly, power consumption of the UE may be reduced when receiving the SIB1 PDCCH on CORESET#0.

For example, if the (candidate) SS/PBCH block index on the SCS_b-based SS/PBCH block and the (candidate) SS/PBCH block index corresponding to SCS_sib1-based CORESET#0 are the same, the UE may assume that the same beam reception is possible. That is, when the (candidate) SS/PBCH block index #a on the SCS_b-based SS/PBCH block is the best beam quality, the UE may preferentially receive CORESET#0 associated with SCS_sib1-based (candidate) SS/PBCH block index #a. Accordingly, when the UE monitors the PDCCH based on SCS_sib1, time for finding the best beam can be saved.

As another example, the link relationship between the (candidate) SS/PBCH block index on the SCS_b-based SS/PBCH block and the (candidate) SS/PBCH block index corresponding to the SCS_sib1-based CORESET#0 may be signaled separately through the SCS_b-based PBCH.

### Embodiment 8

Embodiment 8 relates to a method of interpreting DCI scrambled with a SI-RNTI according to whether it is a licensed band or an unlicensed band and/or whether CAP is performed.

The size of reserved bits included in the DCI scrambled with the CRC byZW the SI-RNTI may vary depending on whether shared spectrum channel access is applied.

For example, for a cell to which shared spectrum channel access is applied (e.g., a cell on an unlicensed band or a cell to which CAP is applied), the reserved bits in the corresponding DCI are 17 bits, and for other cells, the reserved bits in the corresponding DCI may be 15 bits. At this time, in a cell to which shared spectrum channel access is applied, 2 bits additionally included in the corresponding DCI are scrambled when another RNTI (e.g., C-RNTI) is scrambled for the same DCI format, it may be used to indicate a channel access (or CAP) type and/or CP extension length.

That is, the total payload size of the corresponding DCI may vary depending on whether the shared spectrum channel access is applied to the cell. Therefore, if there is no information on whether the corresponding cell is a cell to which shared spectrum channel access is applied before receiving the DCI scrambled by the SI-RNTI (or before receiving the system information), ambiguity about the payload size of the corresponding DCI may occur.

In a basic wireless communication system, whether a cell to which shared spectrum channel access is applied is determined according to a location of a frequency band, and a UE accessing a cell may determine whether or not a cell to which shared spectrum channel access is applied without additional information. For example, when accessing a cell on a frequency band corresponding to 5150-5925 MHz and/or 5925-7125 MHz, the UE may recognize that the corresponding cell is a cell to which shared spectrum channel access is applied.

However, in the FR3 (or FR2-2) band, even a specific frequency band may be a licensed band or an unlicensed band depending on the region, and CAP may or may not be applied even if it is an unlicensed band according to regulation.

Therefore, Embodiment 8 discloses a method for solving the ambiguity problem of the payload size of DCI scrambled CRC by SI-RNTI that may occur in FR 3 (or FR 2-2) band.

For example, a state corresponding to 'ChannelAccess-CPext' may consist of a total of 4, and a field corresponding thereto may consist of 2 bits. However, if the channel is idle for a certain time without 'type 2A CAP' (i.e., random backoff) through DCI format 0_0 or 1_0 in the FR3 (or FR2-2) band, the indication for the CAP in which transmission is allowed) may not be allowed. Accordingly, the state corresponding to 'ChannelAccess-CPext' may consist of two, and the corresponding field may consist of 1 bit.

In one embodiment, as the synchronization raster is otherwise defined, and/or whether the corresponding cell belongs to a licensed band or an unlicensed band via the PBCH payload (i.e., as in Embodiment 1), and/or whether CAP is applied, whether licensed band operation is performed, and/or whether LBT scheme A or B is configured (i.e., as in Example 9), it may be determined whether 2 bits are added to the payload of the DCI scrambled by the SI-RNTI. In this case, 2 bits may be used for indicating a channel access (or CAP) type or/and CP extension length.

The following embodiment illustrates (or assumes) a case where whether or not to apply a CAP is indicated through the PBCH payload, but even if the synchronous raster is defined otherwise, even if the PBCH payload identifies the cell as belonging to a licensed band or an unlicensed band; and/or even if indicated whether CAP applies; and/or even if it is indicated whether a licensed band operation is being performed, and/or even if LBT scheme A or B is indicated, the following embodiments may be applied.

In describing the present disclosure, CAP indication through the PBCH payload may mean explicit indication, or, as in Embodiment 9, CAP application (or LBT scheme A or B) may implicitly indicate according to QCL_para.

As an example, for a cell for which CAP application is indicated through the PBCH payload, the UE may receive the DCI assuming that the reserved bits in the DCI are 17 bits (16 bits when the 'ChannelAccess-CPext' field is configured with 1 bit). In addition, the above example may be extended and applied to DCI format 1_0 or/and DCI format 0_0 scrambled by other RNTIs than the SI-RNTI.

For example, if DCI is CRC scrambled by C-RNTI, CS-RNTI, or MCS-C-RNTI and is not related to a random access procedure by PDCCH order (e.g., DCI format 1_0), for a cell for which CAP application is indicated through the PBCH payload, the UE may receive the corresponding DCI assuming that the 'ChannelAccess-CPext' field in the DCI is composed of 2 bits (1 bit if the 'ChannelAccess-CPext' field is composed of 1 bit).

Conversely, for a cell indicated through the PBCH payload that CAP is not applied, the UE may receive the DCI assuming that the 'ChannelAccess-CPext' field in the DCI is 0 bit.

As another example, when DCI is CRC-scrambled with C-RNTI, CS-RNTI, or MCS-C-RNTI and is related to a random access procedure by PDCCH order (e.g., DCI format 1_0), for a cell for which CAP application is indicated through the PBCH payload, the UE may receive the corresponding DCI assuming that reserved bits in the corresponding DCI are composed of 12 bits (11 bits when the 'ChannelAccess-CPext' field is composed of 1 bit).

Conversely, for a cell indicated through the PBCH payload that CAP is not applied, the UE may receive the corresponding DCI assuming that the reserved bits in the corresponding DCI consist of 10 bits.

For example, for a cell in which DCI is CRC scrambled by P-RNTI (e.g., DCI format 1_0) and CAP application is indicated through the PBCH payload, the UE may receive the DCI assuming that the reserved bits in the DCI are composed of 8 bits (7 bits when the 'ChannelAccess-CPext' field is composed of 1 bit).

Conversely, for a cell indicated through the PBCH payload that CAP is not applied, the UE may receive the corresponding DCI assuming that the reserved bits in the corresponding DCI consist of 6 bits.

For a cell in which DCI is CRC scrambled by RA-RNTI or MsgB-RNTI (e.g., DCI format 1_0) and CAP application is indicated through the PBCH payload, the UE may receive the corresponding DCI assuming that the reserved bits in the DCI are composed of (18-A) bits (17-A bits when the 'ChannelAccess-CPext' field is composed of 1 bit).

Conversely, for a cell indicated through the PBCH payload that CAP is not applied, the UE may receive the DCI assuming that the reserved bits in the DCI are composed of (16-A) bits.

For a cell in which DCI is CRC scrambled with TC-RNTI and CAP application is indicated through PBCH payload, the UE may receive the DCI assuming that the 'ChannelAccess-CPext field' in the DCI is composed of 2 bits (1 bit when the 'ChannelAccess-CPext' field is composed of 1 bit).

Conversely, for a cell indicated through the PBCH payload that CAP is not applied, the UE may receive the DCI assuming that the 'ChannelAccess-CPext' field in the DCI is 0 bit.

For a cell for which CAP application is indicated through the PBCH payload, the UE may receive the corresponding DCI assuming that the 'ChannelAccess-CPext' field in the corresponding DCI (e.g., DCI format 0_0) is composed of 2 bits (or, 1 bit if 'ChannelAccess-CPext field' consists of 1 bit).

Conversely, for a cell indicated through the PBCH payload that CAP is not applied, the UE may receive the DCI assuming that the 'ChannelAccess-CPext' field in the DCI is 0 bit.

In another embodiment, if the cell belongs to a licensed or unlicensed band and/or whether a CAP is applied is not defined by a specific sync raster or set via the PBCH payload, or, as in Embodiment 9, when the UE cannot know whether the licensed band operates and/or whether LBT scheme A or B, 2 bits (or 1 bit if the 'ChannelAccess-CPext' field is configured with 1 bit) may be added to the corresponding DCI size, and whether to use or ignore the corresponding 2 bits for CAP purposes (i.e., for indicating channel access type and/or CP extension length) may be based on CAP application setting through SIB.

The above-described embodiment may be applied even when whether the cell is in a licensed or unlicensed band is not defined by a specific synchronization raster or is not configured through the PBCH payload as in Embodiment 1, and whether or not CAP is applied is indicated/configured through the SIB.

In describing the present disclosure, indicating that the CAP is applied through the SIB may mean an explicit indication or, as in Embodiment 9, CAP application (or LBT scheme A or B) may implicitly indicate according to QCL_para.

In one embodiment, if it is not known through the PBCH payload or synchronization raster whether or not CAP is applied, the UE may receive the DCI assuming that the reserved bits in the DCI are composed of 17 bits (or 16 bits when the 'ChannelAccess-CPext' field is composed of 1 bit).

In addition, when DCI format 1_0 scrambled with an RNTI other than SI-RNTI (e.g., C-RNTI) is transmitted and the application of CAP is signaled in SIB, the UE may receive the corresponding DCI by assuming the corresponding (last) 2 bits (or 1 bit if the 'ChannelAccess-CPext' field is configured with 1 bit) as the 'ChannelAccess-CPext' field.

On the other hand, when DCI format 1_0 scrambled with an RNTI other than SI-RNTI (e.g. C-RNTI) is transmitted and signaled that CAP does not apply in SIB, the UE may ignore the corresponding (last) 2 bits (or 1 bit if the 'ChannelAccess-CPext' field is configured with 1 bit).

Specifically, the following method may be applied to other RNTIs scrambled to the corresponding DCI format 1_0 (other than the SI-RNTI) and/or DCI format 0_0.

For example, when DCI is CRC scrambled by C-RNTI, CS-RNTI, or MCS-C-RNTI and is not related to a random access procedure by PDCCH order (e.g., DCI format 1_0) and if CAP applied is signaled through SIB, the UE may receive the corresponding DCI by assuming that the corresponding (last) 2 bits (or 1 bit if the 'ChannelAccess-CPext' field is composed of 1 bits) is 'ChannelAccess-CPext'.

On the other hand, if it is signaled that the CAP is not applied through the SIB, the UE may ignore the corresponding (last) 2 bits (or 1 bit if the 'ChannelAccess-CPext' field is configured with 1 bit).

As another example, if DCI is CRC scrambled by C-RNTI, CS-RNTI, or MCS-C-RNTI, and is related to a random access procedure by PDCCH order (e.g., DCI format 1_0), and if it is not known via the PBCH payload or synchronous raster whether CAP is applied, the UE may receive the corresponding DCI assuming that reserved bits in the DCI are composed of 12 bits (or 11 bits when the 'ChannelAccess-CPext' field is composed of 1 bit).

As another example, when DCI is CRC scrambled by P-RNTI (e.g., DCI format 1_0), and if it is not known through the PBCH payload or synchronization raster whether or not CAP is applied, the UE may receive the corresponding DCI assuming that reserved bits in the DCI are composed of 8 bits (or 7 bits when the 'ChannelAccess-CPext' field is composed of 1 bit).

As another example, when DCI is CRC scrambled by RA-RNTI or MsgB-RNTI (e.g., DCI format 1_0), and if it is not known via the PBCH payload or synchronous raster whether CAP is applied, the UE may receive the corresponding DCI assuming that reserved bits in the corresponding DCI are composed of 18-A bits (or, if the 'ChannelAccess-CPext' field is composed of 1 bit, 17-A bits).

As another example, when DCI is CRC scrambled by TC-RNTI (e.g., DCI format 1_0), and when CAP application is signaled through SIB, the UE may receive the corresponding DCI by assuming the corresponding (last) 2 bits (or 1 bit if the 'ChannelAccess-CPext' field is configured with 1 bit) as the 'ChannelAccess-CPext' field.

On the other hand, when CAP not applied is signaled through the SIB, the UE may ignore the corresponding (last) 2 bits (or 1 bit if the 'ChannelAccess-CPext' field is configured with 1 bit).

If CAP applied is signaled through SIB, the UE may receive DCI format 0_0 by assuming the corresponding (last) 2 bits (or 1 bit if the 'ChannelAccess-CPext' field is configured with 1 bit) as the 'ChannelAccess-CPext' field.

On the other hand, if CAP not applied is signaled through the SIB, the UE may ignore the corresponding (last) 2 bits (or 1 bit if the 'ChannelAccess-CPext' field is configured with 1 bit).

Embodiment 8 may be equally applied not only to the FR3 (or FR2-2) band, but also to a frequency band (e.g., 6 GHz band) in which a licensed band and an unlicensed band (or whether or not CAP is applied) differ for each region.

### Embodiment 9

Embodiment 9 relates to a method for indicating whether it is a licensed band operation or an unlicensed band operation according to the configured QCL_para value and/or a method for indicating whether LBT scheme A or LBT scheme B according to the configured QCL_para value.

Here, the licensed band operation means an operation without shared spectrum channel access, and the unlicensed band operation may refer to an operation in the case of a shared spectrum channel.

And, LBT scheme A refers to an LBT scheme in which transmission is allowed without determining the state of the channel (e.g., idle/busy state), and LBT scheme B refers to an LBT scheme in which transmission is allowed only when the channel is determined to be idle.

DBTW may be enabled/disabled during SS/PBCH block transmission, but if the maximum value of the SS/PBCH block (candidate) index is 64 (same as FR2), depending on whether the QCL_para value obtained by the UE through the PBCH payload in the initial access process is 64 or less than 64, the presence or absence of a licensed or unlicensed band indication and/or an LBT scheme A or B indication in the SIB may vary.

For example, if the value of QCL_para is configured to 64, since the UE's SS/PBCH block reception and a series of initial access procedures are the same as the FR2 operation, it may not be possible to determine whether the corresponding cell belongs to a licensed or unlicensed band and/or LBT scheme A or B using only the QCL_para value. Therefore, when the QCL_para value is configured to 64, the base station may configure whether the corresponding cell belongs to a licensed or unlicensed band and/or LBT scheme A or B through the SIB. Alternatively, the UE may expect that whether the corresponding cell belongs to a licensed or unlicensed band and or whether LBT scheme A or B is configured through the SIB.

On the other hand, when the QCL_para value is configured to less than 64, since the UE may recognize that DBTW is enabled, the UE may know whether the corresponding cell belongs to the unlicensed band and whether LBT scheme B is configured without separate signaling. Therefore, when the QCL_para value is configured to less than 64, the base station does not need to set whether the corresponding cell belongs to a licensed or unlicensed band and/or LBT scheme A or B through the SIB. Alternatively, the UE may recognize that the corresponding cell belongs to the unlicensed band and LBT scheme B is configured without configuring whether the corresponding cell through the SIB belongs to the licensed or unlicensed band and/or LBT scheme A or B.

As another embodiment, DBTW may be enabled/disabled in SS/PBCH block transmission, but if the maximum value of the SS/PBCH block (candidate) index is 64 (same as FR2), depending on whether the QCL_para value obtained by the UE through the PBCH payload in the initial access process is 64 or less than 64, even if the licensed band or unlicensed band is indicated and/or LBT scheme A or B is not indicated through the SIB, the UE may determine the licensed band or unlicensed band and/or LBT scheme A or B state by default. For example, when the value of QCL_para is configured to less than 64, the UE may recognize that DBTW is enabled, so the UE may know that it is an unlicensed band and LBT scheme B without separate SIB configuration.

On the other hand, when the QCL_para value is set to 64, if LBT scheme A or B is not set by the base station through the SIB, the UE may determine that it is LBT scheme B (or LBT scheme A) by default. If the licensed band or unlicensed band is known to the UE through the PBCH payload or a previous process (e.g., through a synchronization raster value), and if the QCL_para value is configured to 64 and whether LBT scheme A or B is not configured through the SIB by the base station, the UE may determine the LBT scheme as LBT scheme A when known as a licensed band (by default), and determine the LBT scheme as LBT scheme B when known as an unlicensed band.

The above-described method can be applied not only during the initial access process, but also when configuration information about a serving cell (e.g., 'SCell addition', 'hand-over', etc.) or a neighboring cell (e.g., 'measObjectNR IE' setting, etc.) after initial access.

For example, when 'SCell addition' is applied, when the QCL_para value is configured to less than 64 for the serving cell in the FR 3 (or FR 2-2) band, the UE may know that the corresponding cell belongs to the unlicensed band and LBT scheme B is configured without a separate upper layer configuration.

Alternatively, when higher layer signaling is transmitted (after initial access), the QCL_para value and/or the licensed or unlicensed band indication and/or the LBT scheme A or B indication may be jointly coded (e.g., {QCL_para=64 & licensed band & LBT scheme A, QCL_para=64 & unlicensed band & LBT scheme A, QCL_para=64 & unlicensed band & LBT scheme B, QCL_para<64 & unlicensed band & LBT scheme B}) and configured through one RRC parameter.

The method described above may be applied limitedly to a specific SCS (e.g., 120 kHz) on FR3 (or FR2-2), but is not limited thereto.

### Embodiment 10

When DBTW may be enabled/disabling during SS/PBCH block transmission, but the maximum value of the SS/PBCH block (candidate) index is 64 (same as FR 2), when the value of QCL_para obtained by the UE through the PBCH payload in the initial access process is 64, the SS/PBCH block reception and a series of initial access processes of the UE may be the same as the FR2 operation. Therefore, the code point corresponding to the 'QCL_para = 64' configuration on the PBCH payload may be configured to be the same as MIB decryption in FR2-1. Specifically, even in the case of a UE without a DBTW function, there is an advantage that the PBCH payload may be decoded according to the FR2-1 method.

As an embodiment, as shown in Table 8 below, MIB 1 bit corresponding to 'subCarrierSpacingCommon' may be replaced with a QCL_para value. For example, when the value of QCL_para is set to 64 or less than 64 (e.g., 32) according to whether the corresponding bit is '0' or '1', signaling as shown in Table 8 may be introduced. That is, in a state indicating 'SCS120', the value of QCL_para may be configured to 64.

**[Table 8]**

| subCarrierSpacingCommon | QCL_para |
|---|---|
| scs15or60 | X (<64, e.g., X=32) |
| scs30or120 | 64 |

As another embodiment, as shown in Table 9 below, MIB 1 bit corresponding to 'subCarrierSpacingCommon' and LSB 1 bit of 'ssb-SubcarrierOffset' may be substituted for the QCL_para value. For example, when it may be configured whether the QCL_para value is 64 or less than 64 (e.g., 32, 16, 8) according to whether the information corresponding to the 2 bits is '00', '01', '10' or '11', signaling as shown in Table 9 may be introduced. That is, when the state indicating 'SCS120' and the LSB 1 bit of 'SubcarrierOffset' are '0', the value of QCL_para may be set to 64. Accordingly, even if LSB 1 bit of 'SubcarrierOffset' is interpreted as '0', it may be applied when the channel and synchronization raster are designed so that there is no problem with the frequency axis location setting method of CORESE#0.

**[Table 9]**

| subCarrierSpacingCommon | LSB of ssb-SubcarrierOffset | QCL_para |
|---|---|---|
| scs15or60 | 0 | X (<64, e.g., X=8) |
| scs15or60 | 1 | Y(<64, e.g., Y=16) |
| scs30or120 | 0 | 64 |
| scs30or120 | 1 | Z(<64, e.g., Z=32) |

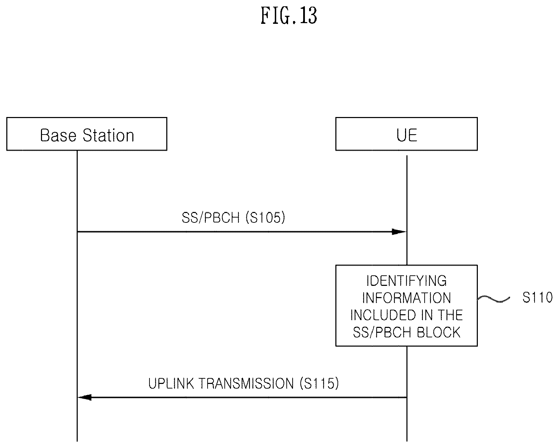

FIG. 13 is a diagram for describing a signaling procedure of a network side and a UE according to the present disclosure. 13 shows an example of signaling between a network side and a UE (or terminal) in a situation to which the Embodiments (e.g., Embodiment 1, Embodiment 2, Embodiment 3, Embodiment 4, Embodiment 5, Embodiment 6, Embodiment 7, Embodiment 8, Embodiment 9, Embodiment 10 or a combination of one or more of its sub-embodiments) of the present disclosure described above may be applied.

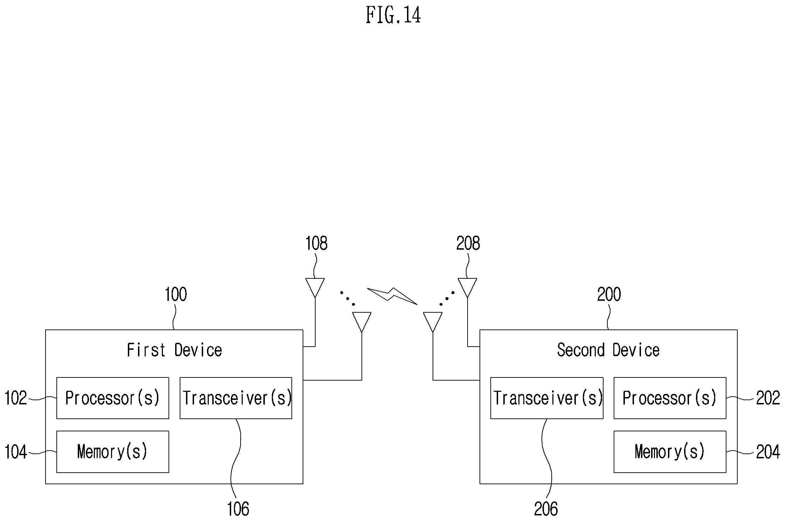

Here, the UE/network side is exemplary and may be applied to various devices as described with reference to FIG. 13. FIG. 14 is for convenience of description and does not limit the scope of the present disclosure.

In addition, some step(s) shown in FIG. 13 may be omitted depending on circumstances and/or settings. In addition, in the operation of the network side/UE of FIG. 13, the above-described uplink transmission/reception operation may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side.

In addition, although the following description is based on a plurality of TRPs, this may be equally extended and applied to transmission through a plurality of panels/cells, and may also be extended and applied to transmission through a plurality of RRHs/RRUs.

In addition, although it is described based on "TRP" in the following description, as mentioned above, "TRP" may be replaced with an expression of a panel, an antenna array, a cell (e.g., macro cell/small cell/pico cell, etc.), a transmission point (TP), a base station (base station, gNB, etc.) and may be applied. As described above, TRPs may be classified according to information (e.g., CORESET index, ID) on the CORESET group (or CORESET pool).

For example, when one UE is configured to transmit/receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

In addition, a base station may mean a generic term for an object that transmits and receives data with a terminal. For example, the base station may be a concept including one or more transmission points (TPs), one or more transmission and reception points (TRPs), and the like. Also, the TP and/or the TRP may include a panel of a base station, a transmission and reception unit, and the like.

The UE may receive SS/PBCH from the network side (S105). For example, the network side operating on the FR2-2 band may transmit the SS/PBCH to the UE using a synchronization raster defined in the corresponding band as a center frequency.

For example, the above-described operation in which the UE (100 or 200 in FIG. 14) in step S105 receives the SS/PBCH from the network side (200 or 100 in FIG. 14) may be implemented by the device of FIG. 14 to be described below.

For example, referring to FIG. 14, one or more processors 102 may control one or more transceivers 106 and/or one or more memories 104, etc. to receive the SS/PBCH, and the one or more transceivers 106 may receive the SS/PBCH from the network side.

The UE may identify information included in the SS/PBCH block (S110). For example, the UE may acquire cell timing and/or QCL relationships between SS/PBCH blocks through information within the SS/PBCH block.

As another example, the UE may identify whether DBTW is applied to the corresponding SS/PBCH block through information in the SS/PBCH block. At this time, the UE may obtain ANR information through a 480 kHz or 960 kHz SCS SS/PBCH block.

For example, the process of identifying information included in the SS/PBCH block by the UE (100 or 200 of FIG. 14) in step S110 described above may be implemented by the device of FIG. 14 to be described below. For example, referring to FIG. 14, one or more processors 102 may control one or more memories 104 or the like to identify information included in SS/PBCH.

The UE may transmit uplink based on information included in the SS/PBCH block (S115).

For example, the UE may receive SIB1 through PBCH information included in the SS/PBCH block and report the SIB1 information to the network side. As another example, the UE may receive ANR related information through the SS/PBCH block and report NCGI related information (e.g., NCGI(s)/ECGI(s)/TAC(s)/RANAC(s)/ PLMN ID(s), etc.) to the network side.

However, this is only one embodiment, and the UE may transmit uplink to the network side based on the above-described embodiment (e.g., Embodiment 1, Embodiment 2, Embodiment 3, Embodiment 4, Embodiment 5, Embodiment 6, Embodiment 7, Embodiment 8, Embodiment 9, Embodiment 10 or a combination of one or more of its sub-embodiments).

For example, the above-described operation of transmitting the uplink by the UE (100 or 200 of FIG. 14) in step S115 may be implemented by the device of FIG. 14 below.

For example, referring to FIG. 14, one or more processors 102 may control one or more transceivers 106 and/or one or more memories 104, etc. to transmit uplinks, and one or more transceivers 106 may telegraph network uplinks.

As mentioned above, the network side/UE signaling and embodiments (e.g., Embodiment 1, Embodiment 2, Embodiment 3, Embodiment 4, Embodiment 5, Embodiment 6, Embodiment 7, Embodiment 8, Embodiment 9, Embodiment 10 or a combination of one or more of its sub-embodiments) described above may be implemented by an apparatus to be described with reference to FIG. 14. For example, the network side (e.g., TRP 1 / TRP 2) may correspond to the first device 100 and the UE may correspond to the second device 200, and vice versa may be considered depending on circumstances.

For example, the aforementioned network-side/UE signaling and operations (e.g., Embodiment 1, Embodiment 2, Embodiment 3, Embodiment 4, Embodiment 5, Embodiment 6, Embodiment 7, Embodiment 8, Embodiment 9, Embodiment 10 or a combination of one or more of its sub-embodiments) may be processed by one or more processors (e.g., 102, 202) of FIG. 14, and the aforementioned network-side/UE signaling and operation (e.g., Embodiment 1, Embodiment 2, Embodiment 3, Embodiment 4, Embodiment 5, Embodiment 6, Embodiment 7, Embodiment 8, Embodiment 9, Embodiment 10 or a combination of one or more of its sub-embodiments) may be stored in a memory (e.g., one or more memories of FIG. 14 (e.g., 104, 204)) in the form of a command/program (e.g., instruction, executable code) for driving at least one processor (e.g., 102 or 202) of FIG. 14.

### General Device to which the Present Disclosure may be applied

FIG. 14 is a diagram which illustrates a block diagram of a wireless communication system according to an embodiment of the present disclosure.

In reference to FIG. 14, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method comprising:
receiving, by a user equipment (100), UE, system information block, SIB, from a base station (200); and
monitoring, by the UE (100), a physical downlink control channel, PDCCH, for at least one of first downlink control information, DCI or second DCI,
wherein, based on information related to a channel access procedure, CAP, being provided through the SIB, the PDCCH is monitored, by the UE (100), for the first DCI including indication information related to a channel access type and cyclic prefix, CP, extension in a frequency range, FR, 2-2,
wherein, based on the information related to the CAP being not provided through the SIB, the PDDCH is monitored, by the UE (100), for the second DCI that does not include the indication information in the FR 2-2,
wherein a size of the indication information included in the first DCI is 2 bits, and
wherein a size of the first DCI and a size of the second DCI are same.

2. The method of claim 1, wherein:
the first DCI and the second DCI are not related to random access procedure by PDCCH order.

3. The method of claim 1, wherein:
based on the second DCI being detected, a bit corresponding to a position of the indication information of the second DCI is reserved.

4. A user equipment (100), UE, comprising:
at least one transceiver (106); and
at least one processor (102) coupled to the one or more transceivers (106);
wherein the at least one processor (102) is configured to:
receive system information block, SIB, from a base station (200) through the at least one transceiver (106); and
monitor a physical downlink control channel, PDCCH, for at least one of first downlink control information, DCI, or second DCI,
wherein, based on information related to a channel access procedure, CAP, being provided through the SIB, the UE (100) is configured to monitor the PDCCH for the first DCI including indication information related to a channel access type and cyclic prefix, CP, extension in a frequency range, FR 2-2,
wherein, based on the information related to the CAP being not provided through the SIB, the UE (100) is configured to monitor the PDDCH for the second DCI that does not include the indication information in the FR 2-2,
wherein a size of the indication information included in the first DCI is 2 bits, and
wherein a size of the first DCI and a size of the second DCI are same.

5. A base station (200) comprising:
at least one transceiver (206); and
at least one processor (202) coupled to the one or more transceivers (206);
wherein the at least one processor (202) is configured to:
transmit system information block, SIB, from a base station (200) through the at least one transceiver (206) to a user equipment, UE (100); and
transmit a physical downlink control channel, PDCCH, for at least one of first downlink control information, DCI, or second DCI through the at least one transceiver (206) to the UE,
wherein, based on information related to a channel access procedure, CAP, being provided through the SIB, the base station (200) is configured to transmit the PDCCH for the first DCI including indication information related to a channel access type and cyclic prefix, CP, extension in a frequency range, FR, 2-2,
wherein, based on the information related to the CAP being not provided through the SIB, the base station (200) is configured to transmit the PDDCH for the second DCI that does not include the indication information in the FR 2-2,
wherein a size of the indication information included in the first DCI is 2 bits, and
wherein a size of the first DCI and a size of the second DCI are same.

## Patentansprüche

1. Verfahren, umfassend:
Empfangen, durch ein Benutzergerät (100), UE, eines Systeminformationsblocks, SIB, von einer Basisstation (200); und
Überwachen, durch das UE (100), eines physikalischen Downlink-Steuerkanals, PDCCH, auf mindestens eine von ersten Downlink-Steuerinformationen, DCI, oder zweiten DCI,
wobei, basierend darauf, dass Informationen in Bezug auf ein Kanalzugriffsverfahren, CAP, über den SIB bereitgestellt werden, der PDCCH durch das UE (100) auf die ersten DCI überwacht wird, die Anzeigeinformationen in Bezug auf einen Kanalzugriffstyp und eine Erweiterung des zyklischen Präfixes, CP, in einem Frequenzbereich, FR, 2-2, umfassen,
wobei, basierend darauf, dass die Informationen in Bezug auf das CAP nicht über den SIB bereitgestellt werden, der PDDCH durch das UE (100) auf die zweiten DCI überwacht wird, die die Anzeigeinformationen im FR 2-2 nicht umfassen,
wobei eine Größe der in den ersten DCI enthaltenen Anzeigeinformationen 2 Bit beträgt, und
wobei eine Größe der ersten DCI und eine Größe der zweiten DCI gleich sind.

2. Verfahren nach Anspruch 1, wobei:
die ersten DCI und die zweiten DCI nicht mit einem Zufallszugriffsverfahren durch eine PDCCH-Anweisung in Zusammenhang stehen.

3. Verfahren nach Anspruch 1, wobei:
basierend darauf, dass die zweiten DCI detektiert werden, ein Bit, das einer Position der Anzeigeinformationen der zweiten DCI entspricht, reserviert wird.

4. Benutzergerät (100), UE, umfassend:
mindestens einen Transceiver (106); und
mindestens einen Prozessor (102), der mit dem einen oder den mehreren Transceivern (106) gekoppelt ist;
wobei der mindestens eine Prozessor (102) konfiguriert ist zum:
Empfangen eines Systeminformationsblocks, SIB, von einer Basisstation (200) über den mindestens einen Transceiver (106); und
Überwachen eines physikalischen Downlink-Steuerkanals, PDCCH, auf mindestens eine von ersten Downlink-Steuerinformationen, DCI, oder zweiten DCI,
wobei, basierend darauf, dass Informationen in Bezug auf ein Kanalzugriffsverfahren, CAP, über den SIB bereitgestellt werden, das UE (100) konfiguriert ist, den PDCCH auf die ersten DCI zu überwachen, die Anzeigeinformationen in Bezug auf einen Kanalzugriffstyp und eine Erweiterung des zyklischen Präfixes, CP, in einem Frequenzbereich, FR 2-2, umfassen,
wobei, basierend darauf, dass die Informationen in Bezug auf das CAP nicht über den SIB bereitgestellt werden, das UE (100) konfiguriert ist, den PDDCH auf die zweiten DCI zu überwachen, die die Anzeigeinformationen im FR 2-2 nicht umfassen,
wobei eine Größe der in den ersten DCI enthaltenen Anzeigeinformationen 2 Bit beträgt, und
wobei eine Größe der ersten DCI und eine Größe der zweiten DCI gleich sind.

5. Basisstation (200), umfassend:
mindestens einen Transceiver (206); und
mindestens einen Prozessor (202), der mit dem einen oder den mehreren Transceivern (206) gekoppelt ist;
wobei der mindestens eine Prozessor (202) konfiguriert ist zum:
Übertragen eines Systeminformationsblocks, SIB, von der Basisstation (200) über den mindestens einen Transceiver (206) an ein Benutzergerät, UE (100); und
Übertragen eines physikalischen Downlink-Steuerkanals, PDCCH, für mindestens eine von ersten Downlink-Steuerinformationen, DCI, oder zweiten DCI über den mindestens einen Transceiver (206) an das UE,
wobei, basierend darauf, dass Informationen in Bezug auf ein Kanalzugriffsverfahren, CAP, über den SIB bereitgestellt werden, die Basisstation (200) konfiguriert ist, den PDCCH für die ersten DCI zu übertragen, die Anzeigeinformationen in Bezug auf einen Kanalzugriffstyp und eine Erweiterung des zyklischen Präfixes, CP, in einem Frequenzbereich, FR, 2-2, umfassen,
wobei, basierend darauf, dass die Informationen in Bezug auf das CAP nicht über den SIB bereitgestellt werden, die Basisstation (200) konfiguriert ist, den PDDCH für die zweiten DCI zu übertragen, die die Anzeigeinformationen im FR 2-2 nicht umfassen,
wobei eine Größe der in den ersten DCI enthaltenen Anzeigeinformationen 2 Bit beträgt, und
wobei eine Größe der ersten DCI und eine Größe der zweiten DCI gleich sind.

## Revendications

1. Procédé comprenant:
la réception, par un équipement utilisateur (100), UE, d'un bloc d'informations système, SIB, provenant d'une station de base (200); et
la surveillance, par l'UE (100), d'un canal physique de commande de liaison descendante, PDCCH, pour au moins les unes parmi des premières informations de commande de liaison descendante, DCI, ou des secondes DCI,
dans lequel, sur la base d'informations relatives à une procédure d'accès au canal, CAP, fournies par le SIB, le PDCCH est surveillé par l'UE (100) afin de détecter les premières DCI comprenant des informations d'indication relatives à un type d'accès au canal et à une extension de préfixe cyclique, CP, dans une gamme de fréquences, FR, 2-2,
dans lequel, étant donné que les informations relatives à la CAP ne sont pas fournies par le SIB, le PDDCH est surveillé par l'UE (100) afin de détecter les secondes DCI qui ne contiennent pas les informations d'indication figurant dans la FR 2-2,
dans lequel la taille des informations d'indication incluses dans les premières DCI est de 2 bits, et
dans lequel la taille des premières DCI et la taille des secondes DCI est la même.

2. Procédé selon la revendication 1, dans lequel:
les premières DCI et les secondes DCI ne sont pas liées à la procédure d'accès aléatoire par ordre PDCCH.

3. Procédé selon la revendication 1, dans lequel:
lorsqu'un deuxième DCI est détecté, un bit correspondant à la position des informations d'indication des secondes DCI est réservé.

4. Équipement utilisateur (100), UE, comprenant:
au moins un émetteur récepteur (106) ; et
au moins un processeur (102) couplé à un ou plusieurs des émetteurs-récepteurs (106);
dans lequel l'au moins un processeur (102) est configuré pour:
recevoir un bloc d'informations système, SIB, provenant d'une station de base (200) par l'intermédiaire de l'au moins un émetteur récepteur (106); et
surveiller un canal physique de commande de liaison descendante, PDCCH, pour au moins les unes parmi des premières informations de commande de liaison descendante, DCI, ou des secondes DCI,
dans lequel, sur la base d'informations relatives à une procédure d'accès au canal, CAP, fournies par le SIB, l'UE (100) est configuré pour surveiller le PDCCH pour détecter les premières DCI comprenant des informations d'indication relatives à un type d'accès au canal et à une extension du préfixe cyclique, CP, dans une gamme de fréquences, FR, 2-2,
dans lequel, étant donné que les informations relatives à la CAP ne sont pas fournies par le SIB, l'UE est configuré pour surveiller le PDDCH afin de détecter les secondes DCI qui ne contiennent pas les informations d'indication figurant dans la FR 2-2,
dans lequel la taille des informations d'indication incluses dans les premières DCI est de 2 bits, et
dans lequel la taille des premières DCI et la taille des secondes DCI est la même.

5. Station de base (200), comprenant:
au moins un émetteur récepteur (206) ; et
au moins un processeur (202) couplé à un ou plusieurs des émetteurs-récepteurs (206);
dans lequel l'au moins un processeur (202) est configuré pour:
transmettre le bloc d'informations système, SIB, provenant d'une station de base (200) par l'intermédiaire de l'au moins un émetteur récepteur (206) à l'équipement utilisateur, UE (100); et
transmettre, à l'UE, par l'au moins un émetteur récepteur (206), un canal physique de commande de liaison descendante, PDCCH, pour au moins les unes parmi des premières informations de commande de liaison descendante, DCI, ou des secondes DCI,
dans lequel, sur la base d'informations relatives à une procédure d'accès au canal, CAP, fournies par le SIB, la station de base (200) est configurée pour transmettre le PDCCH pour détecter les premières DCI comprenant des informations d'indication relatives à un type d'accès au canal et à une extension du préfixe cyclique, CP, dans une gamme de fréquences, FR, 2-2,
dans lequel, étant donné que les informations relatives à la CAP ne sont pas fournies par le SIB, la station de base (20) est configurée pour transmettre au PDDCH les secondes DCI qui ne contiennent pas les informations d'indication figurant dans la FR 2-2,
dans lequel la taille des informations d'indication incluses dans les premières DCI est de 2 bits, et
dans lequel la taille des premières DCI et la taille des secondes DCI est la même.
